(19) Europäisches Patentamt
European Patent Office
Office européen des brevets

(11) EP 1 768 304 A1

(12) EUROPEAN PATENT APPLICATION

(43) Date of publication:
28.03.2007 Bulletin 2007/13

(51) Int Cl.:
H04L 9/32 (2006.01)     H04L 29/06 (2006.01)

(21) Application number: 06019549.2

(22) Date of filing: 19.09.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 21.09.2005 CN 200510103562

(71) Applicant: NEC (China) Co., Ltd.
Suite 1201, Tower E3
Oriental Plaza No. 1
East Chang An Ave.
Dong Cheng District
Beijing 100738 (CN)

(72) Inventors:
• Zeng, Ke
11F, Bldg.A, Innovation Plaza
Beijing 100084 (CN)
• Tomoyuki, Fujita
11F Bldg.A, Innovation Plaza
Beijing 100084 (CN)
• Min-yu, Hsueh
11F Bldg.A, Innovation Plaza
Beijing 100084 (CN)

(74) Representative: Vossius & Partner
Siebertstrasse 4
81675 München (DE)

(54) **Malleable pseudonym certificate system and method**

(57) The invention provides a malleable pseudonym certificate system and method for a communication network. According to one embodiment of the invention, a user acquires a root proof from a trusted entity, generates one or more pseudonym certificates based on the root proof, and sends anonymous public keys each equipped with one pseudonym certificate to verifiers. Through use of the pseudonym certificate, the verifier believes that the user's anonymous public key is certified by the trusted entity. The pseudonym certificate contains no information by which the verifier can figure out the real identity of the user. With the malleable pseudonym certificate system, the trusted entity needs only certify once for the user's root public key. The user can generate by him or herself mass anonymous public keys where each anonymous public key is equipped with a distinct pseudonym certificate.

Fig.3

**Description**

The invention relates to computer communication network security, and more particularly to communication system preserving privacy.

At present, public key cryptosystems are widely used. Conventionally, a number of public key cryptographic encoding and decoding techniques are readily available to provide some degree of security as well as privacy. For example, US Patent No. 4,405,829, issued to Rivest, et al., and El Gamal (Tahir ElGamal, A public-key cryptosystem and a signature scheme based on discrete logarithms, Advances in Cryptology Proceedings; CRYPTO 84, pages 10-18, 1985) are technologies well recognized in the field. The teachings of the Rivest patent and El Gamal are incorporated as reference.

With traditional public key cryptosystems such as RSA and El Gamal, to securely communicate with other parties, a user is required to disclose his/her public key to the outer world. In most cases, however, the user possesses only one public/private key pair, i.e. one public key and its corresponding unique private key. This typical usage of a public key cryptosystem has the unintended consequence of making the user's public key properly serve as his/her identity. It means that even if a privacy concerned user is protected by this kind of public key cryptosystem as well as other well designed privacy protection measures, an adversary is still capable of correlating the activities of the user being protected through the collection and observation of information released by the user based on the pattern of usage of the unique public key.

Within traditional public key cryptosystems, such as those disclosed by RSA and El Gamal, if a user is concerned that her/her single public key may violate her/her privacy, one possible resort is forcing the concerned individual to possess several distinct public keys and release each of the public keys to different correspondents with caution.

Besides possessing many public key pairs, Waters et al. have proposed a method making use of the El Gamal cryptosystem to realize an Incomparable Public Keys Scheme, by which a user can simultaneously possess several public keys wherein all these public keys correspond to a single private key. See B. R. Waters, E. W. Felten, A. Sahai, Receiver Anonymity via Incomparable Public keys, CCS'03, Washington, DC, USA, pp.112~121. (hereinafter *"Waters"*). The teaching of *Waters* is also incorporated as reference.

As discussed above, a user may possess several public keys. However, in most cases, when a person A gets a public key, the public key must be certified by someone else. For example, the public key can be certified by well known Certificate Authority (CA), or the public key can be certified by the person's friend C. If a third person B sees the pubic key and its certificate, said person may trust the public key either because B trusts in CA or alternatively, B trusts in C.

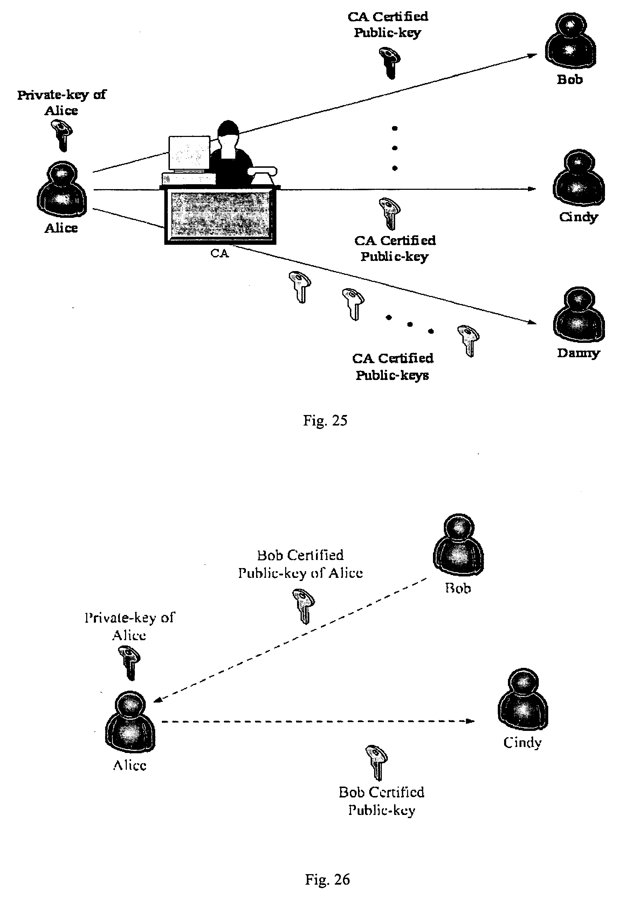

In the case where the user possesses several public keys, one possible way to certify these public keys is to ask CA to certify each of them, as shown in Fig. 25. Since CA must handle all the certificate requests online, a very powerful CA would be required, increasing the cost in terms of ownership and maintenance. Such costs are magnified when each user in the network possesses numerous public keys.

Another possibility is to ask some friends to certify each of the public keys, as shown in Fig. 26. However, this contradicts with the privacy concerns of the user. Not only this, asking friends to certify public keys is not only inefficient, and may be ineffective, but also untrustworthy in many business scenarios.

In addition to the certification of public keys, the above drawbacks of solutions that include a CA centric solution and friend certification solution also exist in many other situations where several pieces of user data need to be certified.

The invention provides a malleable pseudonym certificate system and the method for a communication network.

According to one aspect of the invention, a computing apparatus for a user to certify a data in a communication network is provided. The networking includes a trusted entity and at least one verifier. The computing apparatus comprises: a root proof unit, operatively coupled to the network, the root proof unit being adapted to receive a root proof from the trusted entity; a pseudonym certificate generating unit, operatively coupled to the root proof unit, the <u>pseudonym certificate generating unit being adapted to generate at least one</u> pseudonym certificate based on the root proof; and a transmission unit, operatively coupled to the pseudonym certification generating unit, the transmission unit being adapted to transmit said user's data, coupled with the pseudonym certificate, to the communication network.

According to another aspect of the invention, a method for a user to certify a data in a communication network is provided. The networking includes a trusted entity and at least one verifier. The method comprises: receiving a root proof from the trusted entity; generating at least one pseudonym certificate based on the root proof; and transmitting said user's data coupled with one pseudonym certificate to one verifier.

According to another aspect of the invention, an apparatus for managing certificates in a communication network is provided. The networking includes at least one user and at least one verifier. The apparatus comprises: a system parameter computing unit being adapted to compute system parameters; a parameter publishing unit, operatively coupled to the system parameter computing unit, the parameter publishing unit being adapted to publish shared system parameters which are to be shared by the user and verifier; a root proof request receiving unit, operatively coupled to the network, the root proof request receiving unit being adapted to receive a root proof request from the user; and a root proof generating unit, operatively coupled to the root proof request receiving unit and the system parameter computing unit, the root proof generating unit being adapted to generate a root proof for the user in response to the root proof request, the root proof being used for the user to generate a plurality of pseudonym certificates.

According to another aspect of the invention, a method for managing certificates in a communication network is provided. The networking includes at least one user and at least one verifier. The method comprises: computing system parameters; publishing shared system parameters which are to be shared by the user and verifier; receiving a root proof request from the user; and generating a root proof for the user in response to the root proof request, the root proof being used for the user to generate a plurality of pseudonym certificates.

According to another aspect of the invention, a malleable pseudonym certificate system for a user in a communication network is provided. The networking includes a trusted entity. The system comprises: a root proof unit, operatively coupled to the network, the root proof unit being adapted to receive a root proof from the trusted entity; a pseudonym certification generating unit, operatively coupled to the root proof unit, the pseudonym certification generating unit being adapted to generate at least one pseudonym certificate based on the root proof; a transmission unit, operatively coupled to the pseudonym certification generating unit, the transmission unit being adapted to transmit the user's data, coupled with the pseudonym certificate, to the communication network; and a verifier unit, operatively coupled to the communication network, the verifier unit being adapted to verify the user's data by the pseudonym certificate received.

According to another aspect of the invention, a method of certifying a user's data by a pseudonym certificate in a communication network is provided. The networking including a trusted entity and at least one verifier. The method comprises: issuing a root proof from the trusted entity to the user; generating at least one pseudonym certificate based on the root proof by the user; and transmitting the user's data coupled with one pseudonym certificate to one verifier, the verifier verifying the user's data by the pseudonym certificate.

According to another aspect of the invention, a manufacturing article is provided. The manufacturing article has a machine readable medium with instructions recorded thereon which, when executed by one or more processors, causes the processors to: receive a root proof from a trusted entity; generate at least one pseudonym certificates from the root proof; and transmit a data, coupled with one of the pseudonym certificates, to a verifier.

According to another aspect of the invention, a manufacturing article is provided. The manufacturing article has a machine readable medium with instructions recorded thereon which, when executed by one or more processors, causes the processors to: compute system parameters; publish shared parameters which are to be shared by all users of a network; receive a root proof request from one of the users of the network; and generate a root proof for the user, the root proof being used for the user to generate a plurality of pseudonym certificates.

The malleable pseudonym certificate system has several advantages, especially when used with anonymous public keys. The user can generate trustworthy anonymous public key where the anonymous public key is assured by pseudonym certificate as CA certified. The function of user privacy protection is totally distributed. The user generates distinct anonymous public keys by him or herself, and distinct pseudonym certificates by him or herself as well. The certificate authority's intervention is minimized, hence making lightweight implementation of CA probable. The user cannot abuse anonymity capability because the pseudonym certificate is traceable at the CA side.

The foregoing and other objects of the invention, the various features thereof, as well as the invention itself, may be more fully understood from the following description, when read together with the accompanying drawings in which:

Fig. 1 is a block diagram showing an exemplary system with two terminals utilizing an anonymous public key cryptosystem according to the APK technique, wherein one of the terminals may reveal a different public key for a new communication session with the other terminal;

Fig. 2 is a block diagram showing an exemplary system with several terminals utilizing anonymous public keys cryptosystem according to the APK technique, wherein one terminal may communicate with the other terminals with different public keys used for different communications;

Fig. 3 is a flow chart showing an exemplary communication session between the Sender and the Receiver participating in the communication system illustrated in Fig. 1 and Fig. 2;

Fig. 4 is a block diagram showing the exemplary functional blocks of the Sender and Receiver in a communication session based on public private key pairs in accordance with the APK technique;

Fig. 5 is a block diagram showing the exemplary functional blocks of the APK Generating Device in Fig. 4 in accordance with the APK technique;

Fig. 6 is a flow chart showing an exemplary process flow generating anonymous public keys in accordance with the APK technique;

Fig. 7 is a diagram showing an exemplary procedures of encryption and decryption of a message in accordance with the APK technique;

Fig. 8A is a block diagram schematically showing the general conception of the invention;

Fig. 8B is a flow chart schematically showing the general verifying process of the invention;

Fig. 9 is a block diagram schematically showing the system architecture of the first embodiment of the invention;

Fig. 10 is a flow chart showing an example of CA initialization processes during the system startup phase according to the first embodiment;

Fig. 11 is a flow chart showing an example of the user initialization processes during the system startup phase according to the first embodiment;

Fig. 12 is a flow chart showing an example of the RC request process according to the first embodiment;

Fig. 13 is a flow chart showing how the user generates an anonymous pubic key according to the first embodiment;

Fig. 14 is a flow chart showing how the user derives a pseudonym certificate from a root certificate for the anonymous public key according to the first embodiment;

Fig. 15 is a flow chart showing an example of the anonymous authentication process according to the first embodiment;

Fig. 16 is a flow chart showing the tracing process according to the first embodiment;

Fig. 17 is a block diagram showing an exemplary apparatus of the user according to the first embodiment;

Fig. 18 is a block diagram showing an exemplary apparatus of CA according to the first embodiment;

Fig. 19 is a block diagram schematically showing the system architecture of the second embodiment of the invention;

Fig. 20 is a flow chart showing an example of the pseudonym certifying method according the second embodiment;

Fig. 21 is a diagram showing a process for a prover to prove to a verifier that he/she is within the group with the traditional group signature scheme;

Fig. 22 is a diagram showing an exemplary process for verifying the validations of the pseudonym certificate and the public key with the solution of the second embodiment in accordance with the invention;

Fig. 23 is a diagram showing another exemplary process for verifying the validations of the pseudonym certificate and the public key with the solution of the second embodiment in accordance with the invention;

Fig. 24 is a block diagram showing an example of a verifying unit of the second embodiment in accordance with the invention;

Fig. 25 is a block diagram showing a traditional certificate system in which the certificate is issued by a Certificate Authority; and

Fig. 26 is a block diagram showing another traditional certificate system in which the certificate is issued by a friend of the user.

[Anonymous Public Key]

This application is related to a novel Anonymous Public Key (APK) technique raised by Ke ZENG and Tomoyuki FUJITA. The detailed content of APK technique can be found in a co-pending Chinese patent application No. 200410090903.X, filed on November 10, 2004 by NEC (China) Co., Ltd., entitled "Method, Devices and Systems for Generating Anonymous Public Keys in a Secure Communication System".

Firstly, the technical solution of APK will be explained in the following description.

As discussed above, a user may want to possess several public keys. By employing multiple public key pairs where each distinct public key has a corresponding distinct private key, conventional public key cryptosystems can mitigate the privacy concern to some extent. However, as the number of public keys increases, the managing cost of public key pairs for individual increases. Further, as the number of private keys increases, the security risk of loss or disclosure of private keys increases.

The Incomparable Public Keys Scheme generates new public keys by utilizing different generators to construct the public key of the El Gamal cryptosystem, which makes computation optimization difficult. For example, $(g, g^a)$ and $(h, h^a)$ are different public keys generated by Waters' Incomparable Public Keys Scheme, where g and h are different generators. Conventionally, the El Gamal cryptosystem makes use of only one generator hence it can be benefited by calculating the power of generator off-line and maintaining only one table of the power of generator. Waters' scheme requires either maintaining several tables of the power of different generators, or on-line computation, neither of which is very desirable in terms of computation optimization and cost management.

We bring forward an Anonymous Public Key (APK) technique. APK is distinctive in that end user can by herself generate mass public keys while only one private key is to be maintained and preserved.

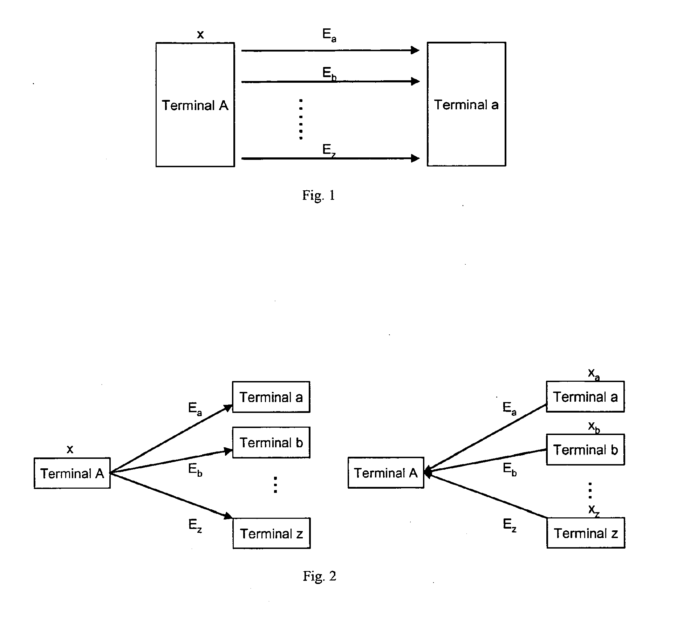

APK technique will be described with reference to Figs. 1-7.

In APK technique, the term "group" refers to the mathematics concept defined as follows unless otherwise indicated:

A group (G,) consists of a set G with a binary operation on G satisfying the following three axioms:

(i) The group operation is associative. That is, a (b c) = (a b) c for all elements a, b, c of G;

(ii) There is an identity element e of G such that a e = e a = a for all elements a of G; and

(iii) For each element a of G there exists an element $a^{-1}$ of G, called the inverse of a, such that a $a^{-1}$ = $a^{-1}$ a = e.

For example, the set of integers Z with operation of addition forms a group. The identity element is 0 and the inverse of an integer a is the integer -a. For more information, please refer to Handbook of Applied Cryptography, available online at http://www.cacr.math.uwaterloo.ca/hac/.

Communication systems in accordance with the APK technique may have several terminals and several communication channels. Fig. 1 shows one example of APK solution in simplified block diagram. In Fig. 1, Terminal A is communicating with Terminal a for several sessions. There is at least one communication channel for Terminal A to send information to Terminal a. The sessions may use one or several communication channels. Terminal a may or may not use the same communication channel to send information to Terminal A. Over the communication channels, Terminal A reveals different public keys $E_a$ to $E_z$ to Terminal a for different communication sessions, but keeps its private key x secret. Terminal a is equivalent to Terminal A in terms of revealing several different public keys to Terminal A if Terminal a needs to do so.

As can be seen in Fig. 1, by generating different public keys for different sessions, it would be virtually impossible for Terminal a, or any third party, to be able to correlate Terminal A's pattern of activities. For example, in an e-auction setting, the user from Terminal A would be able to prevent others from correlating and analyzing its bidding pattern and strategy, since a different public key is generated for each session.

Fig. 2 also shows another complementation of APK technique in simplified block diagram. In Fig. 2, Terminal A is communicating with multiple terminals, from Terminal a to Terminal z. The communication channels in use between Terminal A and each of its correspondents may or may not be the same. As shown in the left half of Fig. 2, over the communication channels, Terminal A reveals different public keys $E_a$ to $E_z$, among other things, to Terminal a, Terminal b,...Terminal z, respectively. In this case, we assume there exists a "one-to-many" relationship between Terminal A and Terminal a to z. Said revelation can be accomplished in various ways. For example, there may be other information that is also revealed together with the public keys, or the public keys may be incorporated in an email or certificate. In return, Terminal a to Terminal z may or may not use the same communication channel, over which each of them receives a public key of Terminal A, to send information, which is encrypted with the public keys that have been received, to Terminal A. As before, Terminal A keeps its private key x secret. Similarly, Terminal a to Terminal z are equivalent to Terminal A in terms of revealing several different public keys to Terminal A if Terminal a to Terminal z need to do so, respectively. Similarly, from the right half of Fig. 2, Terminal a to z reveals their respective own public keys $E_a$ to $E_z$ to Terminal A. In this case, we assume there exists a "many-to-one" relationship between Terminal a to z and Terminal A.

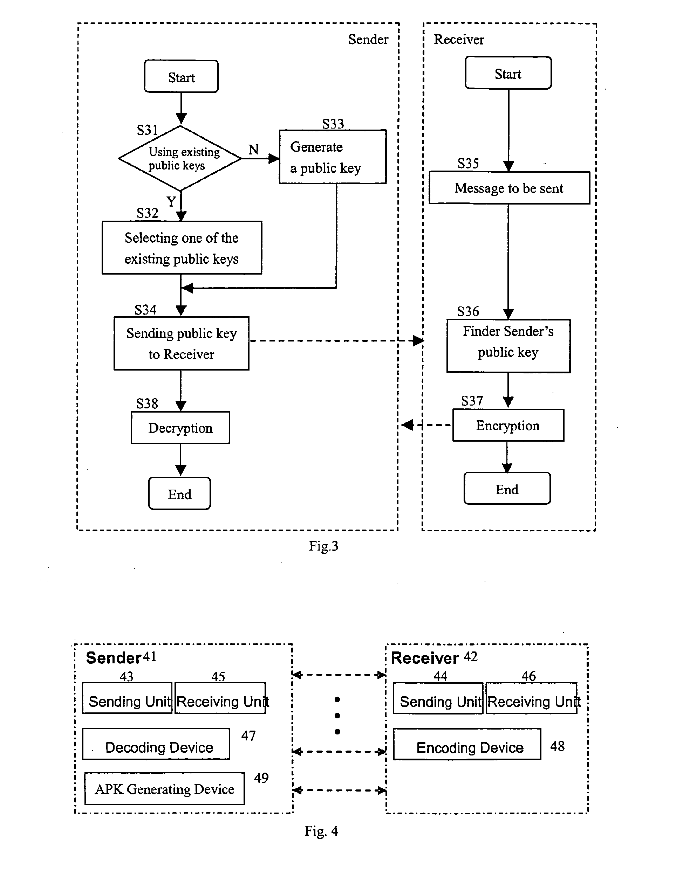

Fig. 3 shows an exemplary communication session between the Sender and the Receiver participating in the communication system illustrated in Fig. 1 and Fig. 2. In Fig. 3, each time the Sender would like to disclose a public key to the Receiver, the Sender decides (step S31) to either select one from its pool of existing public keys (step S32) or generate a new public key (step S33). Then the Sender sends the public key to the Receiver (step S34). Whenever there is message to send (step S35), the Receiver finds the Sender's public key (step S36) to encrypt the message (step S37) and then sends the encrypted message to the Sender. Finally, the Sender decrypts the received encrypted message (step S38) and recovers the original message sent from the Receiver. Note that the Receiver may have received the public key from the Sender long ago before it wants to send encrypted message to the Sender.

It should be pointed out that the Sender may be designed in such a way that it always generates a different public key (Step S33), without relying on any existing keys. However, as can be appreciated by those skilled in the art, the use of an existing pool of public keys will significantly reduce the computation overhead, since manipulation of the existing keys is inherently less computation-intensive than computing from scratch.

It should also be pointed out that the Sender and Receiver in Fig. 3 are only designated this way for convenience sake, since the Sender is the first to send its public key to the Receiver. Once the Receiver has the public key from the Sender, the Receiver actually becomes a sender when it sends the encrypted message to its receiver, the Sender. In a typical bilateral communication session between two terminals, the roles are frequently reversed throughout the session.

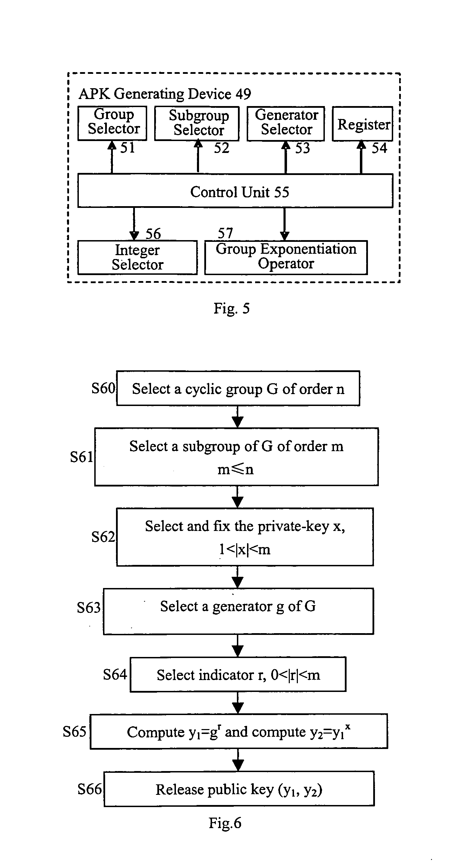

Now reference is turned to Fig. 4, which shows the exemplary functional blocks of the Sender and Receiver in a communication session based on public-private key pairs in accordance with the APK technique. Here, the Sender 41 comprises, at least, a Sending Unit 43 and Receiving Unit 45 which deal with the communication channel, a Decoding Device 47 which handles decryption of cipher texts, and an APK Generating Device 49 which handles APK generating. The Receiver 42 comprises, at least, a Sending Unit 44, a Receiving Unit 46 and an Encoding Device 48 for handling encryption of information to be transmitted such as plain texts. The Sender 41 may disclose multiple public keys to the Receiver 42, such that if there are multiple sessions between the Sender 41 and the Receiver 42, each session may use a different public key of the Sender 41. In case the Sender 41 also acts as a receiver, it may further comprise an Encoding Device 48. Similarly, and in case the Receiver 42 acts as a sender, it may further comprise a Decoding Device 47 and an APK Generating Device 49.

The Encoding Device 48 and the Decoding Device 47 in Fig. 4 are both well known in the field of data communication and encryption. The APK Generating Device 49 is further elaborated in Fig. 5 below. Referring to Fig. 5, the Control Unit 55 handles the process of generating public keys as well as the duty of managing the keys. The Register 54 may be utilized to store the private key, pubic keys generated, public keys received and other data required by the Control Unit 55. In addition, the Register 54 used herein can be implemented by any device that can store information, such as on-chip registers, ROM, and RAM. The Pubic Keys Generating Device 49 may share the Register 54 with the Decoding Device 47 to store cipher texts received and intermediate output in the decryption. Other components of the APK Generating Device 49 will be described later.

Note that in Fig. 5, the "group" operation is handled by the Group Exponentiation Operator 57. There may have other complementation of the APK Generating Device 49 where the group operation is handled by a separate Group Operator.

Next, description will be made to the process of the APK Generating Device 49 of Fig. 5 and Fig. 6 for generating anonymous public keys ("APK") according to APK technique.

Fig. 6 shows the exemplary process flow for generating APK/private key pairs. First, a group G is selected by the Group Selector 51 (Step S60). For example, a computer may have memory in which various data structures representing various eligible groups are stored. Under the control of the Control Unit 55, the Group Selector 51 selects one group by selecting the data structure representing the group. In actual practice, there are already some commercial function libraries that can run on the computer and provide such services. An application program that intends to implement APK technique may call, with some specific parameters, a particular function provided by such libraries. And then the called function can return the desired group(s). In one complementation, G is a finite cyclic group and its order is n, which is a positive integer. Candidates of the finite cyclic group G include but is not limited to:

a group of points on an elliptic curve over a finite field $F_{q1}$;

a multiplicative group $F_{q2}^*$ of a finite field $F_{q2}$, where $q2=p^{m1}$, m1 is a positive integer and p is a prime;

the group of $Z_{n1}^*$, where n1 is a composite integer; and

a multiplicative group of $Z_{n2}^*$, where n2 is a prime.

Among the above four exemplary kinds of groups, the first group may have the best security performance, while the latter three are more commonly used in the art. The "finite cyclic" nature of group G guarantees that the result of group exponentiation operation will eventually be mapped into group G; however the mapping methods may vary from group to group. Besides, it also guarantees the existence of a generator.

Then, the Subgroup Selector 52 selects a subgroup of G of order m, where $m \leq n$ (Step S61). If m is selected as a prime, it will have the preferred security performance. Please note that the subgroup can be selected as G itself, which also means m=n. As in an alternative complementation, on the premise that after the group G is determined or selected, the selection of the subgroup can be omitted, which also means G itself is implicitly selected as the subgroup, since G is a subgroup of itself mathematically. That is also to say, when G itself is selected as the subgroup, which causes m=n, such a selection is seemingly dismissed. Of course, if the selection of the subgroup is omitted, the Subgroup Selector 52 (as described in Fig. 5) can also be omitted.

Then, the Integer Selector 56 selects an integer as the private key x, such that x satisfies $l<|x|<m$ (Step S62). It is to be understood that one terminal may have a plurality of private keys, although the description herein is focused on how to generate a plurality of public keys from one private key, for the sake of simplicity.

Then, the Generator Selector 53 selects and fixes a generator g of group G (Step S63). If G is a finite cyclic group, it always has at least one generator. It is to be noted that the selections of g and x is independent from each other. That is to say, although Step S62 is described prior to Step S63 here, the order of their performance can be reversed or they can be performed in parallel.

After the selection of G, m, x and g, an integer r is selected as the indicator that satisfies $0<|r|>m$ to generate a new public key under the control of the Control Unit 55 (Step S64).

With the selection of G, m, x, g and r, a new public key is generated with the computation of $y_1=g^r$ and then $y_2=y_1^x$ (Step S65). Then the public key $(y_1,y_2)$ can be released (Step S66) to the Receiver for encryption. Of course, there may be other information that is also released together with the public key.

It is to be noted that the selection of g, x, and r has no sequential and dependency requirement between their selections, such that Steps S62, S63, S64 can be performed in any order, sequentially or concurrently. In addition, the selection of g, x and r may be at random or in accordance with some criteria as desired.

Alternately, some of the aforementioned procedures may be omitted by the Control Unit 55, but performed elsewhere. For example, the group G and the subgroup can be assigned by a third party such as an entrust organization. Hence the Control Unit 55 skips steps of selecting the group and subgroup, since they are now determined externally.

Further, if one anonymous public key has been previously generated, it is for certain that the group, subgroup, generator and private key all have been selected and fixed. Therefore when a new public key is to be generated, the Control Unit 55 skips these four steps and goes directly to the following steps.

If $y_1$ or $y_2$ is originally outside the range of group G, they must be mapped into group G. The mapping methods may vary for different groups. However, the cyclic group G guarantees the existence of such mapping method.

It is to be noted that the foregoing steps may be performed either in one single device/module (with integrated or discrete components) of a system, or in a distributed manner with respective devices of the system performing some of the steps, respectively.

An example of the group, subgroup and generator selection is described below. Suppose group $Z_p^*$ is selected where p=11, hence $Z_{11}^*$={1, 2, 3, 4, 5, 6, 7, 8, 9, 10}. Since 11 is a prime, mathematically the order of $Z_{11}^*$ is 11-1=10. The element 2 is a generator of $Z_{11}^*$ as can be easily verified that $Z_{11}^*$={$2^i$ mod 11 / i=0,1,...,9}. Since a group is also a subgroup of itself, the subgroup may be chosen as $Z_{11}^*$. Another choice of subgroup for example is {1, 3, 4, 5, 9} which has the generator 3 of order 5. Again it's easy to verify that $3^5$=1 mod 11.

Furthermore, as can be appreciated by those skilled in the art all of the devices and components can be implemented in hardware, software, firmware or the combination thereof depending upon various considerations.

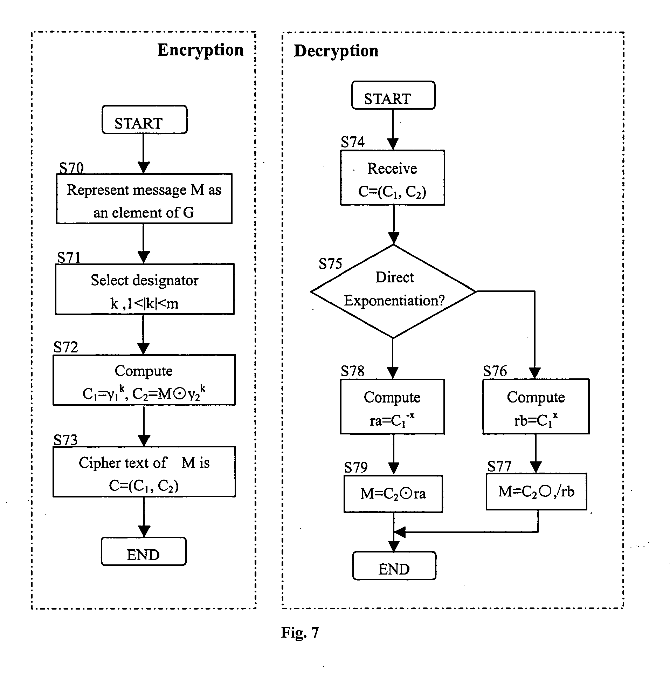

The exemplary method primarily described in Fig. 6 is only one of the numerous methods available for generating anonymous public keys according to APK technique. There are more advanced methods that not only can be used for the same purpose, but also can achieve optimization in performance. To describe the optimization methods, the encoding and decoding procedures well known in the art are briefly summarized with reference to Fig. 4, 5 and 7, wherein ⊙ is a group G invertible operation and ○,/ is the exact inverse operation of ⊙. The APK technique has been applied in the procedures in Fig. 7.

To encrypt a plain text M, M is first represented as an element of G (for example, M is represented as its ASCII code) (Step S70), then an integer k is selected as the designator satisfying l<|k|<m (Step S71) and a pair of values are computed as follows (Step S72)

$$C_1 = y_1^{\,k},$$

and

$$C_2 = M \odot y_2^{\,k},$$

where $C_1$ and $C_2$ are group G members. All of these operations can be done by the Encoding Device 48 in Fig. 4. Examples of ⊙ can be multiplication, division, addition or subtraction of group G. If $C_1$ or $C_2$ is originally outside the range of group G, they must be mapped into group G. The mapping methods may vary for different groups.

At this time, the cipher text of the message M is obtained as C = ($C_1$, $C_2$) (Step S73) and it can be sent out over a communication channel by the Sending Unit 44.

For a message M that is outside the range of group G to be encoded, it must be transformed into several group members before encoding. Following subsequent decoding, the recovered group members may be transformed back to the original message. The transformation methods may vary for different groups. One example is breaking the message into several blocks, each of which is a member of group G, and concatenating all the blocks to reconstruct M.

At the other side of the communication channel, the cipher-text message C is received (Step S74). To retrieve the plain text M from the cipher text C, first it has to be decided between two ways, direct exponentiation or not (Step S75). If yes, rb=$C_1^x$ is first computed (Step S76) and then M is obtained by computing M=$C_2$O,/rb (Step S77); otherwise, ra=$C_1^{-x}$ is first computed (Step S78) and then M is obtained by computing M=$C_2 \odot$ra (Step S79).

After successful decryption of a cipher text ($C_1$, $C_2$), depending on the implementation of decryption, the APK Generating Device 49, in accordance with the APK technique, may make use of the received cipher text as well as the intermediate decryption output ra to generate a new anonymous public key in the form of ($y_1$=$C_1^{-1}$, $y_2$=ra). Similarly, the APK Generating Device 49 may make use of the received cipher text as well as the intermediate decryption output rb to generate a new anonymous public key in the form of ($y_1$=$C_1$, $y_2$=rb). In either way of generating a new anonymous public key, the exponentiation operation is avoided and computation efficiency is enhanced.

Furthermore, when a single anonymous public key ($y_1$, $y_2$) is provided, the APK Generating Device 49 may generate a new anonymous public key in the form of ($y_2$, $y_2^x$). This method can be utilized multiple times to generate a chain of public keys. This way, storage consumption of the public keys generated are heavily reduced since the second portion of the public key, $y_2$, is identical to the first portion of its following. For a chain of w public keys, up to (w-1)/2w percentage of storage are saved which implies approximate 50% saving for w large enough.

In APK technique, since the public keys are generated with the same generator based on the form of powers of the generator, the powers of the generator g can be reused to generate a series of public keys, which involves multiplication, instead of exponentiation, thus saving the memory storage and accelerating the computation. Meanwhile, since only one table of the powers of the generator needs to be maintained in the decoding device, the computation of new public keys can be performed off-line.

For example, in an complementation, when a cipher text message $C=(C_1,C_2)$ is received in the decoding device, C1 can be retrieved and utilized to generate new public keys. As described, $C_1=y_1{}^k=g^{rk}$, and $g^{rk}$ can be saved to generate new public keys because the product "rk" is only another integer. It is to be noted that although $g^{rk}$ can be saved to generate new public keys, the value of rk may still be unknown to the decoding device, unless the encoding device revealed k when sending the encrypted message.

When a single anonymous public key $(y_1, y_2)$ is provided, the APK Generating Device 49 may generate a new anonymous public key in the form of $(y_1 \times y_1, y_2 \times y_2)$, where X is group multiplication. In general, if there are provided several anonymous public keys $(y_{11}, y_{21})$, $(y_{12}, y_{22})$,..., $(y_{1j}, y_{2j})$, j $\geq$2, based on the plurality of stored powers of g, $y_{11}$ =$g^{r1}$, $y_{12}=g^{r2}$,···, $y_{1j}=g^{rj}$, and $y_{21}=y_{11}{}^x$, $y_{22}=y_{12}{}^x$,···, $y_{2j}=y_{1j}{}^x$, a new public key can be computed as $(y_{1(j+1)}=y_{11}y_{12}\cdots y_{1j}$, $y_{2(j+1)}=y_{21}y_{22}\cdots y_{2j})$, where $y_{11}y_{12}\cdots y_{1j}$ is the product of $y_{11}$, $y_{12}$,···, $y_{1j}$, $y_{21}y_{22}\cdots y_{2j}$ is the product of $y_{21}$, $y_{22}$,···, $y_{2j}$. Clearly, to generate a new anonymous public key, the exponentiation operation is replaced by multiplication and computation efficiency is enhanced. Since multiplication can be carried out online, new public keys generated in this way may not need to be pre-computed, which directly implies saving of storage space.

The above optimization techniques may be jointly used to generate new anonymous public keys. For instance, upon receiving and after successful decryption of a series of cipher texts $(C_{11}, C_{21})$, $(C_{12}, C_{22})$...$(C_{1j}, C_{2j})$, j $\geq$2, the APK Generating Device 49 can make use of the received cipher texts as well as the intermediate decryption outputs $rb_1$, $rb_2$, ..., $rb_j$ to generate a new anonymous public key in the form of $(y_1=(C_{11}C_{12}\cdots C_{1j}), y_2=(rb_1rb_2\cdots rb_j))$, where $C_{11}C_{12}\cdots C_{1j}$ is the product of $C_{11}$, $C_{12}$,···, $C_{1j}$, $rb_1rb_2\cdots rb_j$ is the product of $rb_1$, $rb_2$,..., $rb_j$.

Furthermore, with the computation of $y_2$, a series of public keys can be computed as $(y_2{}^{w1}, y_2{}^{w2})$, where $w_1=x^w$, $w_2=x^{(w+1)}$, w$\geq$0. Furthermore, all of the results, specifically the powers of g, obtained in this computation can be utilized to generate further public keys.

Furthermore, based on $C_1$ retrieved from the cipher-text message C, the decoding device can generate more new public keys. For this purpose, $C_1{}^x$ and $C_1{}^{-x}$ can be computed and saved, and then two series of public keys can be generated. In general, when a plurality of encrypted messages $CC_1=(C_{11}, C_{12})$, $CC_2=(C_{21}, C_{22})$,···, $CC_j=(C_{j1}, C_{j2})$ are received, for the case of $C_1{}^x$, a series of new public keys can be generated as $((C_{11}C_{21}\cdots C_{j1})^{u1}, (C_{11}C_{21}\cdots C_{j1})^{u2})$, where $C_{11}C_{21}\cdots C_{j1}$ is the product of $C_{11}$, $C_{21}$,···, $C_{j1}$, j$\geq$1, u1=$x^u$, u2=$x^{(u+1)}$ and u$\geq$0, and for the case of $C_1{}^{-x}$, another series of new public keys can be generated as $((C_{11}C_{21}\cdots C_{j1})^{v1}, (C_{11}C_{21}\cdots C_{j1})^{v2})$, where $C_{11}C_{21}\cdots C_{j1}$ is the product of $C_{11}$, $C_{21}$, ···, $C_{j1}$, j$\geq$1, v1=$-x^v$, v2=$-x^{(v+1)}$ and v$\geq$0. Furthermore, all of the results, specifically the powers of g, obtained in this computation can be utilized to generate further public keys.

[Malleable Pseudonym Certificate]

In the flowing description, the general conception of the invention will be explained.

The APK technique, as described in the aforementioned co-pending application, poses the question on how to certify mass anonymous public keys. For a solution that can certify mass anonymous public keys, we hope it to be:

1. Secure. Nobody can forge the certificate and no one can hide as the holder of a certificate.

2. Reliable. The user privacy will not be disclosed through any certificate.

3. Revocable. In the event that a user abuses anonymity, the real identity of the user can be exposed.

4. Trustworthy. The certificate has business significance.

5. Decentralized. As with the distribution method in APK, the certificate solution should be decentralized.

6. Efficient. The less involvement of third party authorities, the better.

As described above, traditional certification methods have many drawbacks. Further, since APK is a distributed privacy protection solution, a centralized certification solution is not suitable for the APK solution.

Therefore, a distributed solution for certifying user's data is brought forward, i.e., Malleable Pseudonym Certificate (MPC) solution.

The Malleable Pseudonym Certificate (MPC) solution of the invention is a novel solution to certify mass anonymous public keys. Unlike the traditional solution where all the certificates are generated and issued by a trusted entity, MPC solution is a distributed solution in which a user whose data needs to be verified by others generates by him or herself pseudonym certificates from a root proof acquired from a trusted entity.

The root proof may be a certificate issued by the trusted entity for the user to generate pseudonym certificates. Hereinafter, such a certificate is called as a root certificate. The root proof also may be a group private key, by which the user can generate pseudonym certificates in the name of a group member. However, the root proof is not so limited.

The root proof may be any data by which the user's credence can be proved and pseudonym certificates can be generated by certain algorithm.

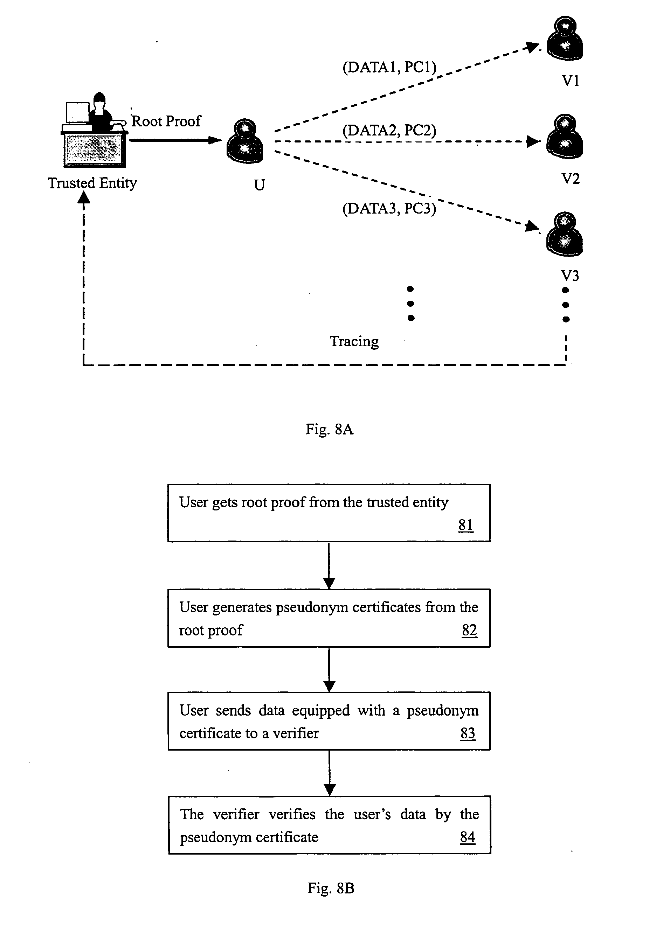

Fig. 8A is a block diagram schematically showing the general conception of the MPC solution.

User U is a user in a network who communicates with other users via the network. During the communication sessions, some of U's data may be required to be verified by another user or peer. For example, user U's data DATA1 is to be verified by user V1, U's data DATA2 is to be verified by user V2, U's data DATA3 is to be verified by user V3, and so on. Hereinafter, the user or peer who wants to verify user U's data to gain confidence is called as a verifier.

DATA1, DATA2 and DATA3 may be different public keys of the user for different communication sessions. In one implementation, these data are incomparable public keys or APKs. However, the data are not limited to public keys. Data to be certified can be any data for various purposes.

In order to authenticate the data, user U sends the data to the verifier (V1, V2, V3, etc), wherein the data is equipped with a certificate, such as PC1, PC2, PC3, etc. In the MPC solution, these certificates are all generated from a root proof issued from a trusted entity to user U. It's notable that these certificates (PC1, PC2, PC3, etc) are computed by user U himself or herself without any intervention of the trusted entity. The verifier verifies user U's data by such an attached certificate, and the data can be assured by the certificate as certified by the trusted entity. If the verifier trusts said trusted entity, he can believe in the authenticity of the data of user U.

The trusted entity may be a CA, a trusted group, a friend of U or other party by whom U's credence can be proven.

In the MPC solution in accordance with the present invention, while the verifier can verify and gain confidence by such certificate that U's data is certified by the trusted entity, the certificates can be generated by the user such that the verifier can by no means figure out the real identity of user U, i.e., the holder of the user's data. Therefore, the certificates generated by the user hereinafter are called as pseudonym certificates.

In the event that the user's data is APK, each pair of APK and pseudonym certificates can be shown to a verifier, e.g., V1. While V1 verifies and gains confidence that the APK is certified by the trusted entity, V1 can by no means figure out the holder of the APK and pseudonym certificate pair. Even if the user communicates with V1 many times, each time he or she shows a distinct pair of anonymous public key and pseudonym certificate, so V1 is unable to tell whether he or she is talking with the user or not.

Fig. 8B is a flow chart schematically showing the general verifying process of the MPC solution in accordance with the present invention.

At step 81, the user gets root proof from a trusted entity. For example, the user gives his/her basic data (hereinafter called root data) and the user's proof thereof to CA. CA performs an identification examination of the user's root data and the user's proof of root data. After the user passes CA's identification examination, CA issues a certificate to the user.

At step 82, the user generates pseudonym certificates from the root proof. From the same roof proof, the user can generate a plurality of distinct pseudonym certificates.

At step 83, the user sends a user's data, equipped with one pseudonym certificate, to a verifier.

At step 84, the verifier verifies said user's data by the pseudonym certificate. Since the data is proved by the pseudonym certificate as certified by the trusted entity, the verifier can have confidence that the user's data is believable if the verifier trusts in the trusted entity. Then, the verifier can communicate securely with the user based on said data. For instance, in the case that the user's data is an anonymous public key, the user may digitally sign his/her message or the verifier may encrypt message for him or her, all based on his/her anonymous public key. However, the user's data is not limited to an anonymous public key of the user. For example, it may be an incomparable public key of the user.

As can be seen from Figs. 8A and 8B, the user can generate trustworthy data where the data is assured by pseudonym certificate as certified by the trusted entity. The function of user privacy protection is totally distributed. The user generates a distinct anonymous public key as well as a distinct pseudonym certificate by him or herself . The trusted entity needs only to issue a root proof for the user's root data. For example, CA issues a root certificate (RC) to the user for his/her root public key. Certificate Authority intervention is minimized thereof and hence a lightweight implementation of CA is practicable.

Further, with the MPC solution in accordance with the present invention, the user's root proof can be stored by the trusted entity such that the pseudonym certificate is traceable at the trusted entity.

In the event that the user U behaves inappropriately, e.g. he/she digitally signs a message but later disavows it, the victim can send the user U's pseudonym certificate back to the trusted entity. It would be the trusted entity and only the trusted entity that has the ability to figure out the real holder of a pseudonym certificate.

Consider a concrete example, U generates a paired anonymous public key and pseudonym certificate. Then he/she communicates with V1, demonstrating the key and certificate. Based on the pseudonym certificate, V1 verifies that the anonymous public key is truly certified by the trusted entity. Therefore, when he/she signs that he/she will pay V1 50$, V1 sends an e-book he/she authored to U. Because V1 only sees the anonymous public key and pseudonym certificate, he/she does not know the real identity of the buyer. Nevertheless, if U bilks, V1 can send the pseudonym certificate to the trusted entity by which the trusted entity can expose the real holder of the pseudonym certificate. In this case, the holder is U who will consequently receive a penalty. In this way, the user cannot abuse the anonymity capability of the system.

[The first embodiment]

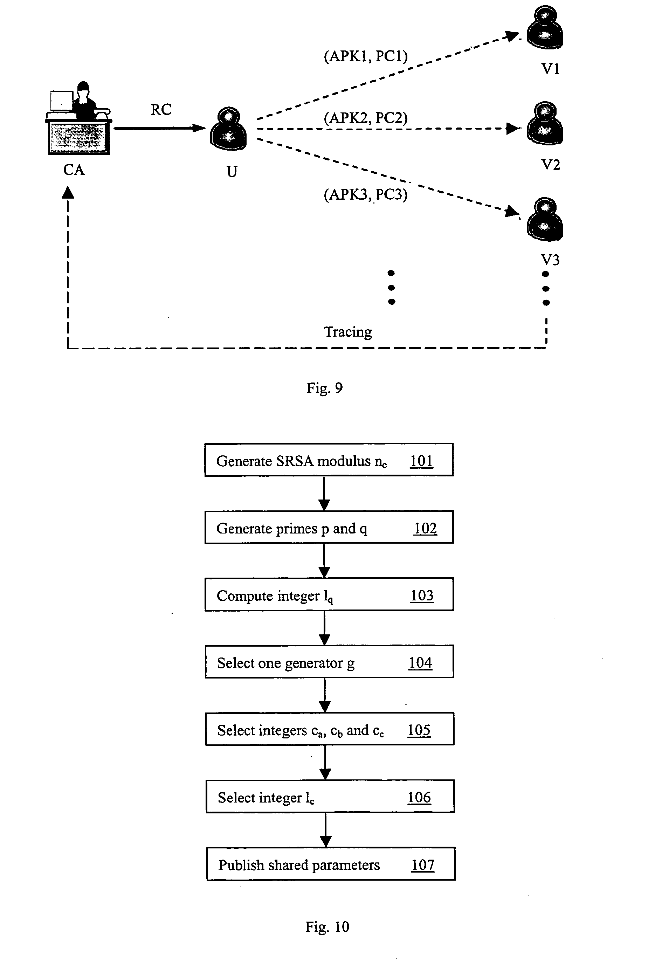

In the following description, the first embodiment in accordance with the invention will be described with reference to Figs. 9-18.

Fig. 9 is a block diagram schematically showing the system architecture of the first embodiment of the invention.

According to the first embodiment, the trusted entity is a Certificate Authority CA. The user U's data to be verified by verifiers are anonymous public keys of the user U.

CA issues a root certificate (RC) to U provided that U passes the personal identification examination. U generates pseudonym certificates from the root certificate for his/her anonymous public keys. Then, U sends an anonymous public key (APK1, APK2, APK3,...) equipped with a pseudonym certificate (PC1, PC2, PC3,...) to a verifier V (V1, V2, V3,...). V verifies pseudonym certificate received from U and accepts the certificate if predetermined conditions are met.

In the first embodiment, U can derive a pseudonym certificate for certain anonymous public keys from RC without intervention of CA, while V can judge the authenticity of U on the basis of the pseudonym certificate with no need to involve CA as well.

In addition, V will store data collected from U and under certain circumstances, e.g. U behaves illegally, V can hand in data collected from U to CA and CA is capable of disclosing the real identity of U.

In the following description, it is supposed that the cryptography is based on the Strong RSA (SRSA) Assumption. For the details of SRSA, please see N. Baric', B. Pfitzmann, Collision-free Accumulators and Fail-stop Signature Schemes without Trees, Advances in Cryptology-EUROCRYPT'97, pp. 480~494, 1997; and R. Cramer, V. Shoup, Signature Schemes Based on The Strong RSA Assumption, ACM Transactions on Information and System Security, vol. 3(3): 161~185, 2000, which are incorporated as reference.

Further, some proof techniques may be used in the embodiments of the invention, which allow one prover to convince the verifier with respect to knowledge of a certain value, while no useful information regarding the value itself is leaked.

In the first embodiment in accordance with the invention, so-called knowledge proof technique is used (see S. Goldwasser, S. Micali, C. Rackoff, The Knowledge Complexity of Interactive Proof Systems, 17th ACM Symposium on Theory of Computation, pp. 291~304, 1985, which is incorporated as reference). Many methods have been proposed to prove the knowledge of discrete logarithm in zero-knowledge (see A. Fiat, A. Shamir, How To Prove Yourself- Practical Solutions to Identification and Signature Problems, Advances in Cryptology - CRYPTO'86, pp. 186~194, 1986; D. Chaum, Demonstrating Possession of a Discrete Logarithm without Revealing It, Advances in Cryptology - CRYPTO'86, pp. 200~212, 1987; D. Chaum, J. H. Evertse, J. van de Graaf, An Improved Protocol for Demonstrating Possession of Discrete Logarithms and Some Generalizations, Advances in Cryptology - EUROCRYPTO'87, pp. 127~141, 1987; D. Chaum, T. P. Pedersen, Wallet Databases with Observers, Advances in Cryptology - CRYPTO'92, pp. 89~105, 1993; and K. Sako, J. Kilian, Receipt-Free Mix-Type Voting Scheme-A Practical Solution to the Implementation of a Voting Booth, Advances in Cryptology - CRYPTO'98, pp. 393~403, 1998, which are incorporated as references).

In the first embodiment of the invention, the notation (1)

$$KP\{(x_1,...,x_i)/(g_1,y_1),...,(g_i,y_i): y_1 = g_1^{x_1}\ and...and\ y_i = g_i^{x_i}\ and$$
$$a_1 < x_1 < b_1\ and...and\ a_i < x_i < b_i\} \tag{1}$$

will be used to denote knowledge proof between the prover and verifier, on common input $(g_j, y_j)$ , where $g_j$ generates $\langle g_j \rangle$, $j = 1,...,i$ , that proves the knowledge of $x_j$ such that $y_j = g_j^{x_j}$ and $a_j < x_j < b_j$ holds, for all $j = 1,...,i$. The technique for proving $a_j < x_j < b_j$ is presented in T. Okamoto, An Efficient Divisible Electronic Cash Scheme, Advances in Cryptology - CRYPTO'95, pp. 438~451, 1995, and later on developed in A. Chan, Y. Frankel, Y. Tsiounis, Easy Come - Easy Go Divisible Cash, Advances in Cryptology - EUROCRYPT'98, pp. 561~575, 1998, in which it has been given the name the Range Bounded Commitment (RBC). The teachings of the above documents are incorporated as reference.

The above notation (1) could be conceivably generalized to the case of proof for multiplication representation. For instance,

$$KP\{(x_1, x_2)/(g_1, h_1, y_1), (g_2, y_2) : y_1 = g_1^{x_1} \times h_1^{x_2} \ and \ y_2 = g_2^{x_2} \ and \ a < x_1 < b\} \quad (2)$$

denotes zero-knowledge proof of $x_1$ and $x_2$ such that $y_1 = g_1^{x_1} \times h_1^{x_2}$ and $y_2 = g_2^{x_2}$ holds simultaneously, provided that $a < x_1 < b$.

Next, The details of the method according to the first embodiment of the invention will be described with reference to Figs. 10-16.

The method according to the first embodiment mainly consists of five phases: system startup, RC request, MPC deriving, anonymous authentication, and tracing (if necessary).

Fig. 10 is a flow chart showing an example of CA initialization processes during the system startup phase according to the embodiment.

At step 101, CA generates SRSA modulus $n_c$. The factorization of $n_c$ is kept secret.

At step 102, CA generates primes p and q such that p-1 is divided exactly by q.

At step 103, CA computes integer $l_q = |q|$, i.e., the length of q.

At step 104, CA selects one generator $g$ of GF(q) (a finite field of order q) from $Z^*_p$.

At step 105, CA selects integers $c_a$, $c_b$ and $c_c$ from QR($n_c$).

At step 106, CA selects an integer $l_c < l_q$.

The above mathematical notions can be found in A. Menezes, P. van Oorschot, S. Vanstone, *Handbook of Applied Cryptography,* CRC Press, 1996, which is incorporated as reference. Finally, at step 107, CA publishes $n_c$,p, q,g,$l_q$,$c_a$,$c_b$,$c_c$ and $l_c$ to the network, e.g., the Internet.

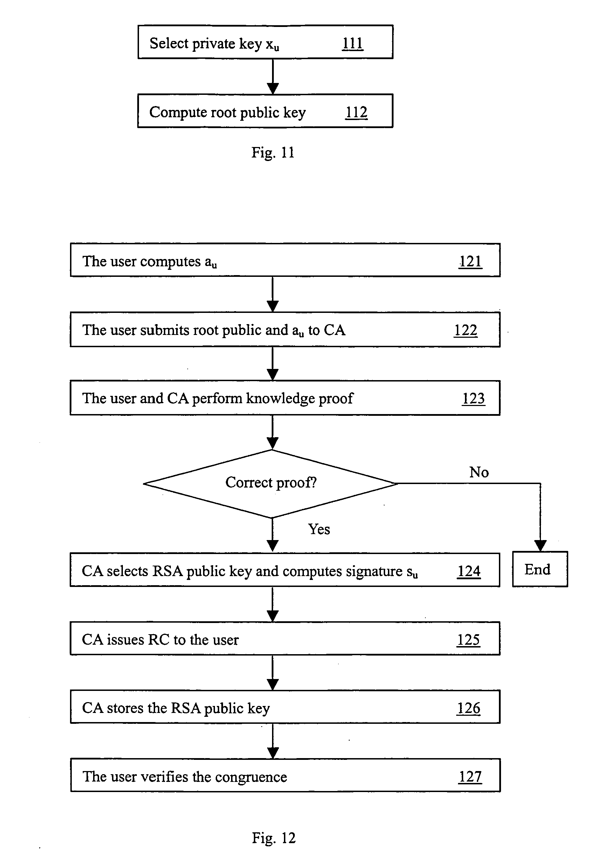

Fig. 11 is a flow chart showing an example of the user initialization processes during the system startup phase according to the embodiment.

According to system parameters published by CA, user U selects randomly its own private key $x_u \in (0,2^{l_q})$ at step 111.

At step 112, the user U computes his/her root public key ($g$, $y_u = g^{x_u}$) (mod p).

To acquire RC, U needs to authenticate his/her identity to CA while CA must make sure that $y_u$ has not been used by some other user as public key.

Fig. 12 is a flow chart showing an example of the RC request process according to the embodiment.

At step 121, the user U computes $a_u = c_a^{x_u}$ (mod $n_c$).

At step 122, the user U submits his/her root public key ($g$, $y_u$) and $a_u$ to CA.

At step 123, the user U and CA perform knowledge proof

$$KP\{(x_u)/(g, y_u), (c_a, a_u) : y_u = g^{x_u} \ and \ a_u = c_a^{x_u} \ and \ x_u \in (-2^{2l_q}, 2^{2l_q})\}.$$

If the knowledge proof is successful, at step 124, CA selects a sufficiently large random prime $e_u > 2^{2l_q+1}$, $\gcd(e_u, f(n_c)) = 1$, make sure that $e_u$ has not been assigned to other user, and computes $s_u = (c_b/a_u)^{1/e_u}$ (mod $n_c$).

At step 125, CA issues $(e_u, s_u)$ to $(g, y_u)$ as RC to the user U.

At step 126, CA stores demasking $e_u$ in database under the name of the user U for possible tracing.

At step 127, the user U verifies that congruence $c_b = s_u^{e_u} \times a_u (\mathrm{mod}\, n_c)$ holds.

Said RC is the two tuple ($e_u$,$s_u$), where $e_u$ is indeed a RSA public key and $s_u$ is the digital signature of $c_b / a_u$. However, as will be demonstrated in the next phase, upon the provision of this single signature, U can effectively derive certificates for all his/her anonymous public keys. RC is a digital signature that signs all anonymous public keys in compliance with the form ($g^r$,$y_u^r$).

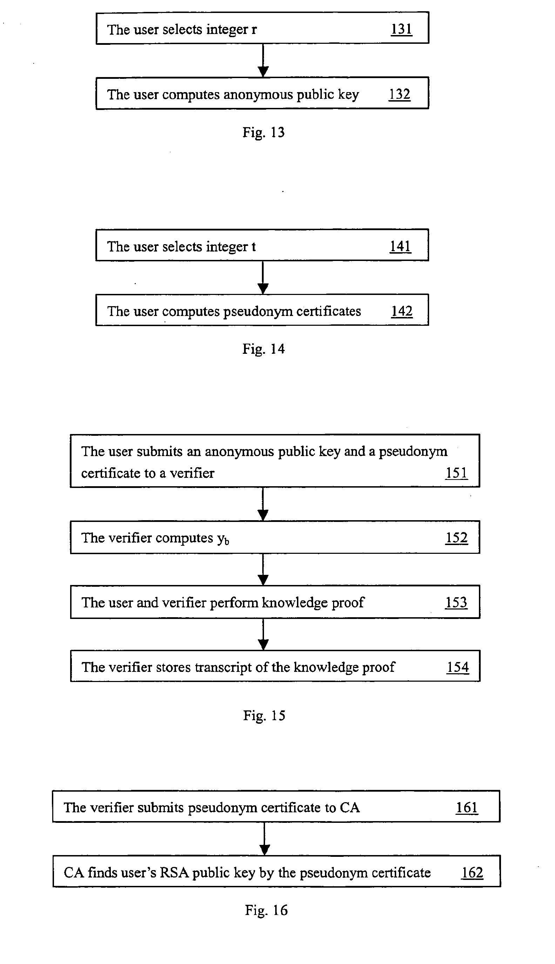

Fig. 13 is a flow chart showing how the user U generates an anonymous pubic key according to the embodiment, and Fig. 14 is a flow chart showing how the user U derives a pseudonym certificate from RC for an anonymous public key according to the embodiment. The anonymous pubic key and pseudonym certificate together guarantee privacy protection and anonymous authenticity.

As shown in Fig. 13, the user U selects an integer $r$ from {0,1,$\cdots$,$2^{l_c}$-1} at step 131, and computes an anonymous public key($g^r$,$y_u^r$) (mod p) at step 132.

As shown in Fig. 14, the user U selects an integer $t$ from $\{0,1,\cdots,q\text{-}1\}$ at step 141, and computes

$$\widetilde{s}_u = s_u \times c_c^{\,t}(\mathrm{mod}\,n_c)\;\mathrm{and}\;\;\widetilde{y}_u = \widetilde{s}_u^{\,e_u}(\mathrm{mod}\,n_c)\;\text{ at step 142.}$$

The pseudonym certificate is actually the two tuple $(\widetilde{s}_u, \widetilde{y}_u)$.

Now, U has $c_b = \widetilde{s}_u^{\,e_u} \times c_a^{\,x_u} \times c_c^{\,-t \times e_u}(\mathrm{mod}\,n_c)\,,$ wherein knowledge of $e_u$, $x_u$ and $-t \times e_u$ will be proved to the verifier in the next phase.

After preparation of an anonymous public key and pseudonym certificate, U can present them to the verifier.

Fig. 15 is a flow chart showing an example of the anonymous authentication process according to the embodiment.

At step 151, the user U submits an anonymous public key ($y_{1r} = g^r$, $y_{2r} = y_u^{\,r}$) and pseudonym certificate ($\widetilde{s}_u$, $\widetilde{y}_u$) to the verifier V.

At step 152, V computes $y_b = c_b / \widetilde{y}_u \,(\mathrm{mod}\,n_c)$ .

At step 153, the user U and the verifier V performs the knowledge proof:

$$KP\{x_1,x_2,x_3)/(\widetilde{s}_u,\widetilde{y}_u),(c_a,c_c,y_b),(y_{1r},y_{2r}): \widetilde{y}_u = \widetilde{s}_u^{\,x_1}\;and\;y_b = c_a^{\,x_2} \times c_c^{\,x_3}\;and$$

$$y_{2r} = y_{1r}^{\,x_2}\;and\;x_2 \in (-2^{\,2l_q},2^{\,2l_q})\}$$

At step 154, V stores a transcript of the above knowledge proof for possible tracing.

Since CA has stored demasking $^{eu}$ in its database under the name of the user U at step 126 in Fig. 12, CA has tracing capability.

After V accepts the anonymous public key of U as CA CMS certified and carries out a transaction with U, if U behaves inappropriately, V can provide evidence of U's inappropriate behavior to CA and ask CA for help. CA will definitely inspect the evidence received from V. If, from the view point of CA, there is a sound reason for V to know the real identity of U, CA can cooperate with V to ascertain the real identity of U.

Fig. 16 is a flow chart showing the tracing process according to the embodiment.

At step 161, V submits the pseudonym certificate ($\widetilde{s}_u$, $\widetilde{y}_u$) to CA.

At step 162, for all demasking $e_u$ stored in its database, CA computes $\widetilde{s}_u^{\,e_u}(\mathrm{mod}\,n_c)\,,$ and compares the results with $\widetilde{y}_u$.

A matching $\widetilde{s}_u^{\,eu}$ and $\widetilde{y}_u$ reveals the demasking value of the owner of the pseudonym certificate ($\widetilde{s}_u$, $\widetilde{y}_u$). In this way, CA can discover and disclose the real identity of U.

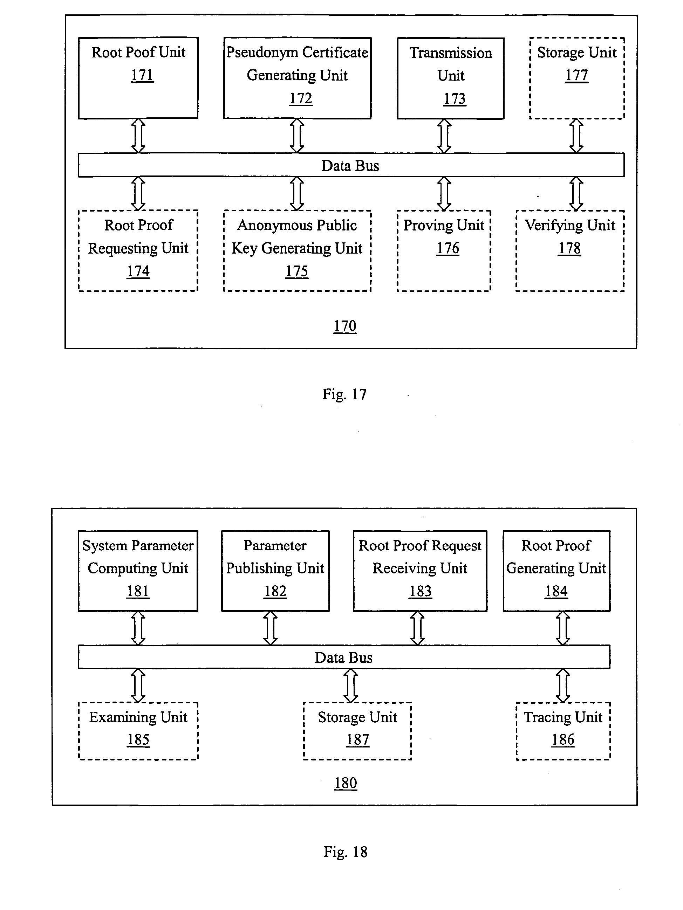

Next, the exemplary apparatus at the user side and CA side will be described with reference to Figs. 17 and 18.

Fig. 17 is a block diagram showing example apparatus 170 of the user according to the first embodiment.

As shown in Fig. 17, the user apparatus 170 basically comprises a root proof unit 171 for receiving RC from CA, a pseudonym certificate generating unit 172 coupled to the root proof unit 171 for generating pseudonym certificates based on RC, and a transmission unit 173 coupled to the pseudonym certificate generating unit 172 for transmitting the user's data equipped with a pseudonym certificate.

In the case that the root certificate is requested by a digital request via the network, the user apparatus 170 may further comprise a root proof requesting unit 174 for generating a request for RC and transmitting the request to CA.

The user's data to be verified by a verifier may be a public key, an incomparable public key, an anonymous public key, etc. In the case of anonymous public key, the user apparatus 170 may further comprise an anonymous public key generating unit 175 for generating anonymous public keys. The detailed structure of the anonymous public key generating unit 175 can be found in the above description of the APK technique. When the user's data to be certified by the pseudonym certificate are not anonymous public keys, the anonymous public key generating unit 175 can be replaced by a corresponding data generating unit.

If the issuance of RC requires the proving process between the user and CA or the verifier requires a knowledge proof during the authentication process, the user apparatus 170 may further comprise a proving unit 176 for performing the proving operation with the verifier or CA.

The above mentioned units may each comprise a memory for storing data used by the respective unit. In another implementation, the user apparatus 170 may comprise a storage unit 177 for storing data used by all the units during the operation of the apparatus.

In most cases, the user will also need to verify another user's received data. Therefore, user apparatus 170 may comprise a verifying unit 178 for verifying the data received from another user by the pseudonym certificate attached thereto.

The root proof unit 171, the transmission unit 173, the root proof requesting unit 174, the proving unit 176 and the verifying unit 178 may transmit/receive data to/from the network through respective communication ports or a communication unit in the user apparatus 170 coupled to the above units for communicating with other apparatus via the network.

The above units are coupled to each other to perform the processes according to the first embodiment of the invention. When the units are implemented as hardware modules, they could be coupled with each other by a data bus.

Fig. 18 is a block diagram showing an exemplary apparatus 180 of CA according to the first embodiment.

As shown in Fig. 18, CA apparatus 180 basically comprises a system parameter computing unit 181 for computing system parameters, a parameter publishing unit 182 coupled to the system parameter computing unit 181 for publishing parameters which are to be shared by all users of the network, a root proof request receiving unit 183 coupled to the network for receiving a RC request from the user, and a root proof generating unit 184 coupled to the root proof request receiving unit 183 and said system parameter computing unit 181 for generating RC for the user in response to the root proof request.

In the case that the user's RC request should be examined before a root certificate is issued, the CA apparatus 180 further comprises an examining unit 185 coupled to the root proof request receiving unit 183 for performing identification examination in response to a user's RC request. The identification examination may include the above mentioned knowledge proving process.

In the case that a tracing ability is desired, the CA apparatus may further comprise a tracing unit 186 coupled to the network for tracing the identity of the owner of a pseudonym certificate received from a verifier using stored demasking values of the root certificates generated by the root proof generating unit 184.

The above mentioned units may each comprise a memory for storing data used by the respective unit. In another implementation, the CA apparatus 180 may comprise a storage unit 187 for storing data used by all the units during the operation of the apparatus. For example, the RCs generated by root proof generating unit 184 can be stored in the memory inside the root proof generating unit 184 or be stored in the storage unit 187.

The above units are coupled to each other to perform the processes according to the first embodiment of the invention. When the units are implemented as hardware modules, they could be coupled with each other by a data bus.

The parameter publishing unit 182 and the root proof request receiving unit 183 may transmit/receive data to/from the network through respective communication ports or a communication unit in the CA apparatus 180 coupled to the above units for communicating with other apparatus via the network.

The above described user apparatus and CA apparatus are merely examples. However, the components included in the apparatus are not limited to those units described, and the particular structure may be modified or changed. For example, the apparatus may comprise other units that are typically installed in a computing apparatus in the network, such as an I/O interface for inputting and outputting the data, various communicating interfaces for connecting to other apparatus via the network, a controller for controlling the operation of each unit, etc. They are omitted from the figures since such units are common sense in the art, and a person skilled in the art would easily consider adding them to the apparatus described above.

The first embodiment of the invention has been described as an example. However, the invention is not limited to the particular details described in the first embodiment. For example, the user's public key can be generated by other methods. The Incomparable Public Keys (see B. R. Waters, E. W. Felten, A. Sahai, Receiver Anonymity via Incomparable Public Keys, CCS'03, Washington, DC, USA, pp.112~121, 2003) can be used as the user' data which is to be certified by the pseudonym certificate. Also, the user's data certified by a pseudonym certificate is not limited to a public key, but may be any data or message sent by the user. In addition, the embodiment can be modified to adapt to other proof techniques and methods of CA. Besides the algorithm described in Fig 14, other algorithms can be used to compute the pseudonym certificates from RC, as long as the algorithm ensures that the pseudonym certificate keep the same verifiable proof or secret as RC and at the same time, makes the verifier blind to the information regarding the identity of the owner of said data. The first embodiment has been described such that the root public key is $(g, y_u)$. However, the root public key can be any one of the anonymous public keys $(g^r, y_u{}^r)$ .

[The second embodiment]

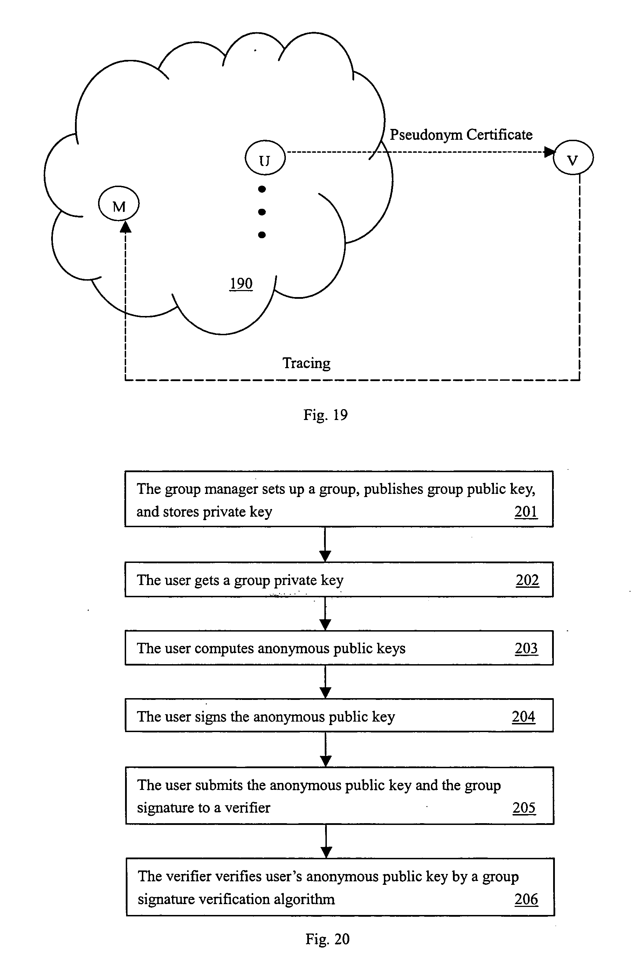

In the following description, the first embodiment in accordance with the invention will be described with reference to Figs. 19-20.

The second embodiment of the invention takes use of a group signature scheme to produce pseudonym certificates for public keys. Here, the public keys may be incomparable public keys, anonymous public keys or any other public keys of the user.

Group signature schemes have been well studied in the past 15 years (see D. Chaum, E. van Heyst, Group Signatures, Advances in Cryptology - EUROCRYPTO'91, pp. 257~265, 1991; J. Camenisch, M. Michels, A Group Signature Scheme Based on an RSA-Variant, Advances in Cryptology - ASIACRYPT'98, pp. 160~174, 1998; and G. Ateniese, J. Camenisch, M. Joye, G. Tsudik, A Practical and Provably Secure Coalition-Resistant Group Signature Scheme, Advances in Cryptology - CRYPTO'2000, pp. 255~270, 2000, which are incorporated as references). Roughly speaking, there is a group manager who sets up a group and handles admission and revocation of group members. All group members share the same group public key $PKg$ but each member $U_i$ has a different private key $SK_i$. Given message $m$, group member $U_i$ can sign the message on behalf of the group as $s = SIG(m,PKg,SK_i)$ where $SIG(\times)$ is a special group signature algorithm. The signatures on message $m$ can be verified by the group public key $PKg$, i.e. there is a signature verification algorithm $VERIF(\times)$ that, on given $PKg$,s and $m$, $VERIF(s,m,PKg)$ outputs valid if and only if $s = SIG(m,PKg,SK_i)$. However, it would be very difficult for the verifier to determine the signer $U_i$ of $s$. From the viewpoint of the verifier, any group member has an equal probability of being the signer of $s$. This interesting feature is where the name "group signature" originates.

Some group signature schemes provide a capability wherein the group manager can determine the signer $U_i$ of $s$, i.e. there is a tracing algorithm $TRACE(\times)$ that, on given $PKg$,s and $SKm$, $TRACE(s,PKg,SKm)$ outputs $U_i$ if and only if $s = SIG(m,PKg,SK_i)$, where $SKm$ is the private key of the group manager.

Fig. 19 is a block diagram schematically showing the system architecture of the second embodiment of the invention.

According to the second embodiment, the trusted entity is a group 190 setup by a group manager M. The user U is a member of the group, and possesses a group private key assigned to him/her. In the traditional group signature schemes, a message is signed on behalf of the group. However, in the second embodiment of the invention, the group signature is used to generate the pseudonym certificates of the public keys.

Fig. 20 is a flow chart showing an example of the pseudonym certifying method according the second embodiment.

At initialization stage 201, the group manager sets up a group and publishes a group public key $PKg.$ In addition, the group manager keeps private key $SKm$ secret which will be utilized in tracing mal-behaving users.

At step 202, a group member U joins the group and gets his/her group private key $SK_u$ for this group.

At step 203, U computes anonymous public key $apk = (g^r, y_u{}^r)$ (modp).

At step 204, U takes $apk$ as a piece of a message, and digitally signs the anonymous public key $apk$ as $s = SIG(apk,PKg,SK_u)$. In this way it is obvious that, $s$ is a group signature on $apk$.

At step 205, U submits $s$ and $apk$ to a verifier for validation, and the verifier verifies the user's anonymous public key at step 206. Since $VERIF(s,apk,PKg)$ will output a valid response, the $apk$ will be accepted by verifier as digitally signed by an anonymous group member. Therefore s guarantees that an anonymous group member owns the anonymous public key $apk.$ That is to say, $s$ is an pseudonym certificate on the anonymous public key $apk.$

It is obvious that the root proof in the second embodiment in accordance with the invention is a group private key of the user.

In the event that tracing is necessary, s will be presented to the group manager M, whereupon the group manager can determine and disclose the identity of U, since the tracing algorithm $TRACE(s,PKg,SKm)$ will output U.

In the above example, the user's data is an anonymous public key. However, the user's data can be other data of the user, such as an incomparable public key, or any other public key of the user.

The user apparatus of the second embodiment in accordance with the invention is similar to the apparatus 170 shown in Fig. 17. In the second embodiment, the root proof unit receives user's group private key from a group manager, the pseudonym certificate generating unit generates pseudonym certificates by way of group signature and the transmission unit transmits the user's data equipped with a pseudonym certificate to the network. The root proof requesting unit in the second embodiment is used to generate a request for group membership and transmitting the request to the group manager.

As discussed above, through a group signature verification algorithm, the verifier could be convinced that the user's data is certified by a group member. However, in many cases, the verifier needs to know whether the user who sends the data signed in the name of a group member is the true owner of the data or is the true member who signs that data.

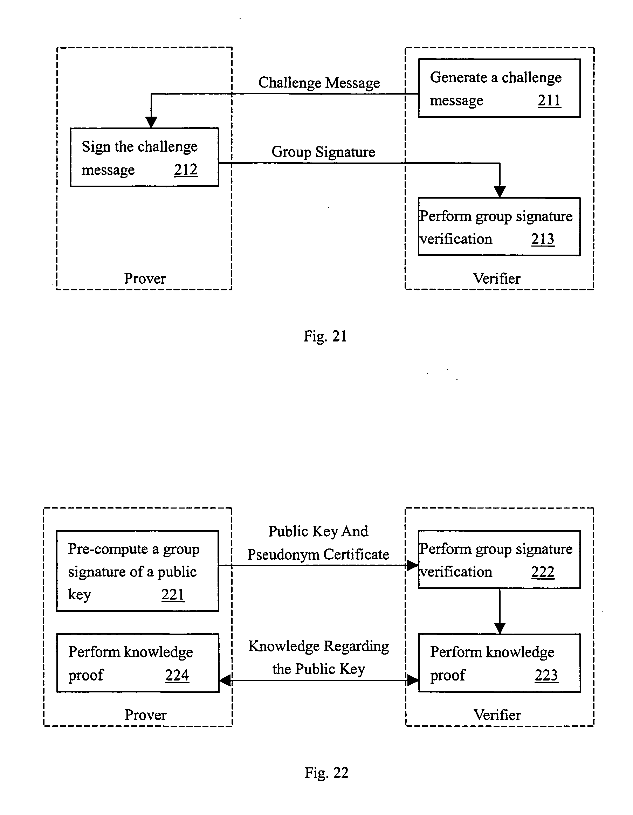

Fig. 21 is a diagram showing a process for a prover to prove to a verifier that he/she is within the group with the traditional group signature scheme.

As shown in Fig. 21, at the beginning, the verifier generates a challenge message (step 211), and sends it to the prover. Upon receiving the challenge message from the verifier, the prover signs the challenge message using his/her group private key (step 212), and sends the group signature generated back to the verifier. Then, the verifier performs group signature verification on the data received from the prover with the group public key (step 213). A correct verification convinces the verifier that the prover is within the group.

Note that, with the traditional group signature scheme, the prover responses to the challenge message generated by the verifier and computes the group signature for the challenge message in an online fashion. Such online computation of the group signature is time-consuming and costly. Moreover, if the prover contacts the verifier several times, the verifier generates a new challenge message each time and the prover has to compute several group signatures.

With the solution of the second embodiment in accordance with the invention, it is more convenient and efficient to verify the validations of the pseudonym certificate and the user's data (i.e., his/her public key).

Fig. 22 is a diagram showing an exemplary process for verifying the validations of the pseudonym certificate and the public key with the solution of the second embodiment in accordance with the invention.

As shown in Fig. 22, the prover signs the public key using his/her group private key to generate a group signature in advance (step 221). When the prover wants to contact the verifier, he/she sends the public key along with the generated pseudonym certificate (i.e., the group signature corresponding to that public key) to the verifier. Upon receiving the public key and the pseudonym certificate from the prover, the verifier performs group signature verification on the user's data by the pseudonym certificate and a group public key (step 222). A correct verification convinces the verifier that the public key is signed by a group member. If the verifier wants to know whether the user is just the group member who signs that public key, the verifier may ask the prover to prove knowledge concerning the public key. At step 223 and 224, the knowledge proof is carried over the public key. The particular proving process is similar to that shown in Fig. 15. If the prover proves to the verifier the knowledge of private key that corresponds to the public key, the verifier may trust the prover.

It is obvious that with the above described method in accordance with the invention, the pseudonym certificate could be pre-computed, rather than computed in an online fashion in response to the verifier's challenge. That's to say, the prover could compute group signatures at spare time of the computing device at the prover side. Before contacting the verifier, the multiple pseudonym certificates as well as public keys could be already available. When contacting the verifier, the prover needs only to send the public key with the pseudonym certificate to the verifier. The verifier checks the validity of the pseudonym certificate. Then the prover proves to the verifier only the knowledge of private-key that corresponds to the public key. This proof is much efficient than group signature signing.

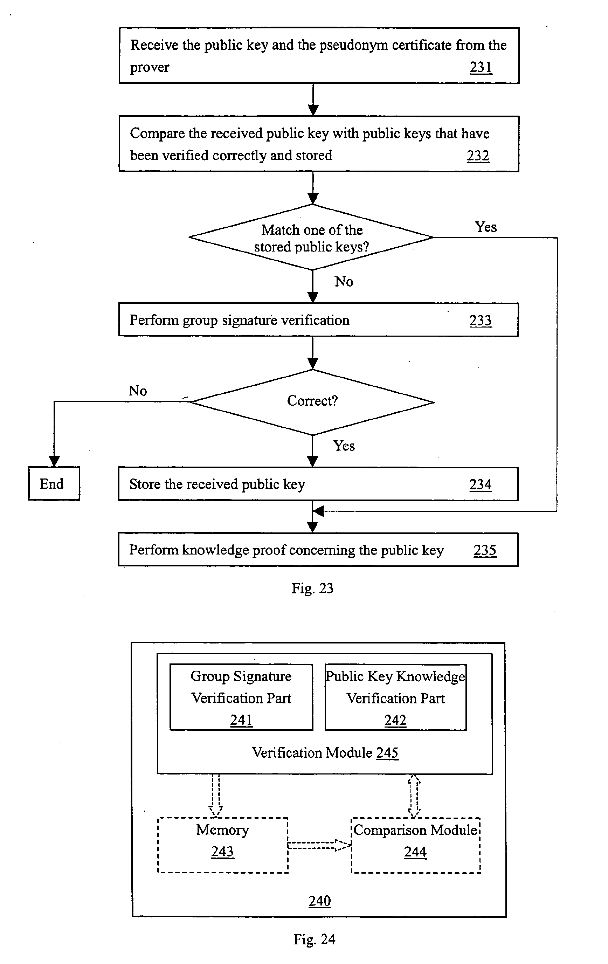

Fig. 23 is a diagram showing another exemplary process for verifying the validations of the pseudonym certificate and the public key with the solution of the second embodiment in accordance with the invention.

Assuming that the verifier has stored the public keys, which are ever verified correctly. When the verifier receives a public key with a pseudonym certificate from a prover (step 231), the verifier compares the received public key with the public keys that have been verified correctly and stored (step 232). If the received public key matches one of the stored public keys, the verifier can go directly to the knowledge proof concerning the public key (step 235). If there is no matched public key, the verifier performs group signature verification on received public key by the pseudonym certificate of the public key and a group public key (step 233). If the received pseudonym certificate passes through the group signature verification, the verifier stores the received public key as a public key that has been verified correctly (step 234), and then the process goes to step 235. Otherwise, the process ends.

If the prover decides to contact the verifier multiple times with the same pseudonym certificate, the verifier needs only to check the validity of the pseudonym certificate at the first time. In the following sessions, the verifier simply matches the public key received from the prover with its local cached public keys. If there is one matching, the verifier and prover can go directly to knowledge proof concerning the public key. This kind of usage is most efficient while anonymity and trust are all maintained.

Fig. 24 is a block diagram showing an example of a verifying unit of the second embodiment in accordance with the invention. The verifying unit 240 is disposed in the verifier's computing apparatus, or may be disposes in the user apparatus as the verifying unit 178 shown in Fig. 17.

The verifying unit 240 comprises a verification module 245 for performing verification on the group signature and the public key. The verification module 245 may be divided into group signature verification part 241 and a public key knowledge verification part 242. When receiving a public key coupled with a group signature from a prover, the verification module 245 verifies the group signature by the group signature verification part 241 using the public key received and a group public key. After the public key received from the prover is verified correctly by the group signature verification part 241, the public key knowledge verification part 242 performs knowledge proof with the prover concerning the public key received along with the group signature.

The verifying unit 240 may further comprise a memory 243 coupled to the verification module 245 and a comparison module 244 coupled to the verification module 245 and the memory 243. The memory 243 stores the public keys that have ever been verified correctly. When receiving a public key and a group signature from a prover, the comparison module 244 compares the received public key with the public keys stored in the memory 243, and notifies the verification module 245 of the result of the comparison. If the received public key is the same as one of the public keys that have ever been verified correctly, the verification module 245 skips the computation of the group signature verification algorithm, and directly performs the knowledge prove concerning the public key received along with the group signature with the prover by the public key knowledge verification part 242. If the received public key does not match any one of the stored public keys, the verification module 245 carries out the computation of the group signature verification algorithm as described above by the group signature verification part 241.

According to the invention, in the case that the trusted entity is CA, the verification on the certificate and the public key can be carried out in a similar manner. With reference to Fig. 15, after the anonymous public key and the pseudonym certificate are computed by the user, the anonymous public key is sent to the verifier along with the equipped pseudonym certificate (step 151). Then, the verifier perform knowledge prove with the user to verify the pseudonym certificate and the anonymous public key (step 153). As shown in step 153, with the present invention, the pseudonym certificate and the anonymous public key can be verified together by one knowledge prove. In one implementation, the user computes the anonymous public key, pseudonym certificate and the data necessary for the knowledge prove in an offline manner. After receiving such data, the verifier can verify the pseudonym certificate and the public key through a local computation. In another implementation, the verifier stores the public key that ever be verified correctly. At the time of verifying the certificate and the public key transmitted by the user, the verifier firstly compares the user's public key with those stored. If there is a match, it means that the public key is the one that is verified correctly. During the knowledge prove with the user, the verifier would bypass the computation of the knowledge prove concerning the certificate, and only the prove concerning the public key with the user is needed. Compared with the online verification or the stepwise verification of the certificate and the public key of the traditional solution, the above verification according to the present invention is more efficient.

In the case that the trusted entity is CA, the verifying unit in the verifier's apparatus also comprises a verification module. In one implementation, the verifying unit performs the knowledge prove as shown, for example, in the step 153 of Fig. 15. In another implementation, the verifying unit may further comprise a memory coupled to the verification module and a comparison module coupled to the verification module and the memory. The memory stores the public keys that have ever been verified correctly. When receiving a certificate and a public key from a prover, the comparison module compares the received public key with the public keys stored in the memory, and notifies the verification module of the result of the comparison. If the received public key is the same as one of the public keys that have ever been verified correctly, the verification module skips the computation of the knowledge prove concerning the certificate, and only performs the knowledge prove concerning the public key with the prover. If the received public key does not match any one of the stored public keys, the verification module carries out the computation of the knowledge prove concerning the certificate and the public key, as shown in Step 153 of Fig. 15, for example.

The process and apparatus for the verification of the certificate and the user's data in the two cases according to the invention have been descried above. However, the invention is not limited to the particular details described above. Modifications and changes to the process and apparatus for the verification may be made by one skilled in the art according to the particular application and algorithms.

As can be seen from the above description, according to the invention, the user can generate a trustworthy anonymous public key where the anonymous public key is assured by an pseudonym certificate as certified by a trusted entity. The function of user privacy protection is totally distributed. The user generates a distinct anonymous public key by him or herself, and distinct pseudonym certificate by him or herself as well. In one embodiment in accordance with the invention, the intervention of CA, is minimized, hence a lightweight implementation of the trusted entity is probable. Moreover, the user cannot abuse the anonymity capability because the pseudonym certificate is traceable at the CA or the group manager level.

The present invention may be implemented in hardware, software, firmware or a combination thereof and utilized in systems, subsystems, components or sub-components thereof. When implemented in software, the elements of the present invention are essentially programs or the code segments used to perform the necessary tasks. The program or code segments can be stored in a machine readable medium or transmitted by a data signal embodied in a carrier wave over a transmission medium or communication link. The "machine readable medium" may include any medium that can store or transfer information. Examples of the machine readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, etc. The data signal may include any signal that can propagate over a transmission medium such as electronic network channels, optical fibers, air, electromagnetic, RF links, etc. The code segments may be downloaded via computer networks such as the Internet, Intranet, etc.

The invention may be embodied in other specific forms without departing from the spirit or essential characteristics thereof. For example, the algorithms described in the specific embodiment can be modified while the system architecture does not depart from the basic spirit of the invention. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A computing apparatus for a user to certify a data in a communication network, said networking including a trusted entity and at least one verifier, said computing apparatus comprising:

a root proof unit, operatively coupled to said network, said root proof unit being adapted to receive a root proof from said trusted entity;

a pseudonym certificate generating unit, operatively coupled to said root proof unit, said pseudonym certificate generating unit being adapted to generate at least one pseudonym certificate based on said root proof; and

a transmission unit, operatively coupled to said pseudonym certification generating unit, said transmission unit being adapted to transmit said user's data, coupled with said pseudonym certificate, to said communication network.

2.  The computing apparatus of claim 1, wherein said pseudonym certificate is generated such that it contains no information by which said verifier can figure out the real identity of said user.

3.  The computing apparatus of claim 1 or 2, wherein said user's data contains a public key of said user.

4.  The computing apparatus of claim 3, wherein said public key contained in said user's data is an incomparable public key.

5.  The computing apparatus of claim 3, wherein
    said public key contained in said user's data is an anonymous public key, and
    said computing apparatus further comprises an anonymous public key generating unit, operatively coupled to said transmission unit, said anonymous public key generating unit being adapted to generate a plurality of anonymous public keys of said user, said plurality of anonymous public keys being corresponding to a private key of said user.

6.  The computing apparatus of claim 5, wherein said anonymous public key generating unit generates said plurality of anonymous public keys from said private key and a generator, said private key and said generator being from a predetermined group.

7.  The computing apparatus of any one of claims 1 to 6, wherein said root proof is a root certificate issued to said user by said trusted entity.

8.  The computing apparatus of any one of claims 1 to 7, wherein said root proof is a group private key of said user, and wherein said pseudonym certificate is a group signature of said user's data.

9.  The computing apparatus of any one of claims 1 to 8, further comprising a root proof requesting unit, operatively coupled to said network, said root proof requesting unit being adapted to generate a request for said root proof and transmit said request to said trusted entity.

10. The computing apparatus of any one of claims 1 to 9, further comprising a proving unit, operatively coupled to said network, the proving unit being adapted to perform knowledge proof with said trusted entity or said verifier.

11. A method for a user to certify a data in a communication network, said networking including a trusted entity and at least one verifier, said method comprising:

    receiving a root proof from said trusted entity;
    generating at least one pseudonym certificate based on said root proof; and
    transmitting said user's data coupled with one pseudonym certificate to one verifier.

12. The method of claim 11, wherein said pseudonym certificate is generated such that it contains no information by which said verifier can figure out the real identity of said user.

13. The method of claim 11 or 12, wherein said user's data contains a public key of said user.

14. The method of claim 13, wherein said public key contained in said user's data is an incomparable public key.

15. The method of claim 13, wherein
    said public key contained in said user's data is an anonymous public key, and
    the method further comprises generating a plurality of anonymous public keys by said user, said plurality of anonymous public keys being corresponding to a private key of said user.

16. The method of claim 15, wherein said plurality of anonymous public keys are generated from said private key and a generator, said private key and said generator being from a predetermined group.

17. The method of any one of claims 1 to 16, wherein said root proof is a root certificate issued to said user by said trusted entity.

18. The method of any one of claims 1 to 17, wherein said root proof is a group private key of said user, and wherein said pseudonym certificate is a group signature of said user's data.

19. The method of any one of claims 1 to 18, further comprising generating a request for said root proof and transmitting said request to said trusted entity.

20. The method of any one of claims 1 to 19, further comprising performing knowledge proof with said trusted entity or said verifier.

21. An apparatus for managing certificates in a communication network, said networking including at least one user and at least one verifier, said apparatus comprising:

   a system parameter computing unit being adapted to compute system parameters;
   a parameter publishing unit, operatively coupled to said system parameter computing unit, said parameter publishing unit being adapted to publish shared system parameters which are to be shared by said user and verifier;
   a root proof request receiving unit, operatively coupled to said network, said root proof request receiving unit being adapted to receive a root proof request from said user; and
   a root proof generating unit, operatively coupled to said root proof request receiving unit and said system parameter computing unit, said root proof generating unit being adapted to generate a root proof for said user in response to said root proof request, said root proof being used for the user to generate a plurality of pseudonym certificates.

22. The apparatus of claim 21, wherein said root proof is a root certificate issued to a public key of said user.

23. The apparatus of claim 21, wherein said root proof is a root certificate issued to a root anonymous public key of said user.

24. The apparatus of claim 21, wherein said root proof is a group private key issued to said user.

25. The apparatus of claim 21, 22, 23 or 24, further comprising an examining unit, operatively coupled to said root proof generating unit, said examining unit is adapted to perform identification examination on said root proof request.

26. The apparatus of any one of claims 21 to 25, further comprising an tracing unit, operatively coupled to said network, said tracing unit is adapted to trace the identity of the owner of a pseudonym certificate received from said verifier based on said root proof.

27. A method for managing certificates in a communication network, said networking including at least one user and at least one verifier, said method comprising:

   computing system parameters;
   publishing shared system parameters, which are to be shared by said user and verifier;
   receiving a root proof request from said user; and
   generating a root proof for said user in response to said root proof request, said root proof being used for the user to generate a plurality of pseudonym certificates.

28. The method of claim 27, wherein said generating a root proof comprises generating a root certificate issued to a public key of said user.

29. The method of claim 27, wherein said generating a root proof comprises generating a root certificate issued to a root anonymous public key of said user.

**30.** The method of claim 27, wherein said generating a root proof comprises generating a group private key issued to said user.

**31.** The method of claim 27, 28, 29 or 30, further comprising performing identification examination on said root proof request after receiving said root proof request.

**32.** The method of any one of claims 27 to 31, further comprising tracing the identity of the owner of a pseudonym certificate received from said verifier based on said root proof.

**33.** A malleable pseudonym certificate system for a user in a communication network, said networking including a trusted entity, said system comprising:

a root proof unit, operatively coupled to said network, said root proof unit being adapted to receive a root proof from said trusted entity;

a pseudonym certification generating unit, operatively coupled to said root proof unit, said pseudonym certification generating unit being adapted to generate at least one pseudonym certificate based on said root proof;

a transmission unit, operatively coupled to said pseudonym certification generating unit, said transmission unit being adapted to transmit said user's data, coupled with said pseudonym certificate, to said communication network; and

a verifier unit, operatively coupled to said communication network, said verifier unit being adapted to verify said user's data by the pseudonym certificate received.

**34.** The system of claim 33, wherein said pseudonym certificate is generated such that it contains no information by which the verifier unit can figure out the real identity of said user.

**35.** The system of claim 33 or 34, wherein said user's data contains a public key of said user.

**36.** The system of claim 35, wherein said public key contained in said user's data is an incomparable public key.

**37.** The system of claim 35, wherein
said public key contained in said user's data is an anonymous public key, and
the system further comprises an anonymous public key generating unit, operatively coupled to said transmission unit, said anonymous public key generating unit being adapted to generate a plurality of anonymous public keys of said user, said plurality of anonymous public keys being corresponding to a private key of said user.

**38.** The system of claim 37, wherein said anonymous public key generating unit generates said plurality of anonymous public keys from said private key and a generator, said private key and said generator being from a predetermined group.

**39.** The system of any one of claims 33 to 38, wherein said root proof is a root certificate issued to said user by said trusted entity.

**40.** The system of any one of claims 33 to 38, wherein said root proof is a group private key of said user, and wherein said pseudonym certificate is a group signature of said user's data.

**41.** The system of any one of claims 33 to 40, wherein said verifier unit comprises:

a verification module for performing verification on said pseudonym certificate and said user's data.

**42.** The system of claim 41, wherein said verifier unit further comprises:

a memory couple to said verification module for storing the data that have been verified correctly; and
a comparison module operatively coupled to said memory and said verification module, said comparison module is adapted to compare the received user's data with said stored data.

**43.** The system of any one of claims 33 to 42, further comprising a tracing unit, operatively coupled to said verifier unit, said tracing unit is adapted to trace the identity of the owner of a pseudonym certificate received from said verifier unit based on said root proof.

44. A method of certifying a user's data by a pseudonym certificate in a communication network, said networking including a trusted entity and at least one verifier, comprising:

issuing a root proof from said trusted entity to said user;
generating at least one pseudonym certificate based on said root proof by the user; and
transmitting said user's data coupled with one pseudonym certificate to one verifier, said verifier verifying said user's data by said pseudonym certificate.

45. The method of claim 44, wherein said pseudonym certificate is generated such that it contains no information by which said verifier can figure out the real identity of said user.

46. The method of claim 44 or 45, wherein said user's data contains a public key of said user.

47. The method of claim 46, wherein said public key contained in said user's data is an incomparable public key.

48. The method of claim 46 or 47, wherein
said public key contained in said user's data is an anonymous public key, and
the method further comprises generating a plurality of anonymous public keys by said user, said plurality of anonymous public keys being corresponding to a private key of said user.

49. The method of claim 48, wherein said plurality of anonymous public keys are generated from said private key and a generator, said private key and said generator being from a predetermined group.

50. The method of any one of claims 44 to 49, wherein issuing a root proof comprises issuing a root certificate to a public key of said user.

51. The method of any one of claims 44 to 50, wherein issuing a root proof comprises issuing a group private key to said user, and said generating at least one pseudonym certificate comprises generating a group signature of said user's data.

52. The method of any one of claims 44 to 51, wherein said verifier verifies said pseudonym certificate and said user's data by performing knowledge proof with said user.

53. The method of any one of claims 44 to 52, wherein said verifier verifies said pseudonym certificate and said user's data by:

storing the data that have been verified correctly by said verifier;
comparing the user's data received from said user with said stored data;
If said user's data matches one of said stored data, performing knowledge proof concerning said user's data with said user; and
If said user's data does not match any one of said stored data, performing verification on said pseudonym certificate and said user's data.

54. The method of any one of claims 44 to 53, further comprising tracing by said trusted entity the identity of the owner of a pseudonym certificate received from said verifier based on said root proof.

55. A manufacturing article having a machine readable medium with instructions recorded thereon which, when executed by one or more processors, causes the processors to:

receive a root proof from a trusted entity;
generate at least one pseudonym certificates from said root proof; and
transmit a data, coupled with one of said pseudonym certificates, to a verifier.

56. The manufacturing article of claim 55, wherein said data is an anonymous public key.

57. A manufacturing article having a machine readable medium with instructions recorded thereon which, when executed by a processor, cause the processor to:

compute system parameters;

publish shared parameters, which are to be shared by all users of a network;

receive a root proof request from one of said users of the network; and

generate a root proof for said user, said root proof being used for said user to generate a plurality of pseudonym certificates.

58. The manufacturing article of claim 57, wherein said root proof is a root certificate for a root anonymous public key of said user.

Fig. 1

Fig. 2

Fig.3

Fig. 4

**APK Generating Device 49**

| Group Selector | Subgroup Selector | Generator Selector | Register |
|---|---|---|---|
| 51 | 52 | 53 | 54 |

Control Unit 55

56 57

| Integer Selector | Group Exponentiation Operator |
|---|---|

Fig. 5

S60 — Select a cyclic group G of order n

S61 — Select a subgroup of G of order m
$m \leqslant n$

S62 — Select and fix the private-key x,
$1 < |x| < m$

S63 — Select a generator g of G

S64 — Select indicator r, $0 < |r| < m$

S65 — Compute $y_1 = g^r$ and compute $y_2 = y_1^x$

S66 — Release public key $(y_1, y_2)$

Fig.6

**Encryption**

```
START
```

S70
Represent message M as
an element of G

S71
Select designator
$k, 1<|k|<m$

S72
Compute
$C_1=y_1{}^k, C_2=M\odot y_2{}^k$

S73
Cipher text of M is
$C=(C_1, C_2)$

```
END
```

**Decryption**

```
START
```

S74
Receive
$C=(C_1, C_2)$

S75
Direct
Exponentiation?

S78
Compute
$ra=C_1{}^{-x}$

S79
$M=C_2\odot ra$

S76
Compute
$rb=C_1{}^x$

S77
$M=C_2\bigcirc,/rb$

```
END
```

Fig. 7

(DATA1, PC1)

V1

(DATA2, PC2)

V2

(DATA3, PC3)

V3

Root Proof

Trusted Entity

U

Tracing

Fig. 8A

| User gets root proof from the trusted entity       **81** |
| :-- |
| User generates pseudonym certificates from the root proof       **82** |
| User sends data equipped with a pseudonym certificate to a verifier       **83** |
| The verifier verifies the user's data by the pseudonym certificate       **84** |

Fig. 8B

Fig. 9

| Generate SRSA modulus $n_c$ | 101 |
|---|---|

| Generate primes p and q | 102 |
|---|---|

| Compute integer $l_q$ | 103 |
|---|---|

| Select one generator g | 104 |
|---|---|

| Select integers $c_a$, $c_b$ and $c_c$ | 105 |
|---|---|

| Select integer $l_c$ | 106 |
|---|---|

| Publish shared parameters | 107 |
|---|---|

Fig. 10

| Select private key $x_u$ | <u>111</u> |

↓

| Compute root public key | <u>112</u> |

Fig. 11

| The user computes $a_u$ | <u>121</u> |

↓

| The user submits root public and $a_u$ to CA | <u>122</u> |

↓

| The user and CA perform knowledge proof | <u>123</u> |

↓

Correct proof? — No → End

Yes

↓

| CA selects RSA public key and computes signature $s_u$ | <u>124</u> |

↓

| CA issues RC to the user | <u>125</u> |

↓

| CA stores the RSA public key | <u>126</u> |

↓

| The user verifies the congruence | <u>127</u> |

Fig. 12

| The user selects integer r | <u>131</u> |

↓

| The user computes anonymous public key | <u>132</u> |

Fig. 13

| The user selects integer t | <u>141</u> |

↓

| The user computes pseudonym certificates | <u>142</u> |

Fig. 14

| The user submits an anonymous public key and a pseudonym certificate to a verifier | <u>151</u> |

↓

| The verifier computes $y_b$ | <u>152</u> |

↓

| The user and verifier perform knowledge proof | <u>153</u> |

↓

| The verifier stores transcript of the knowledge proof | <u>154</u> |

Fig. 15

| The verifier submits pseudonym certificate to CA | <u>161</u> |

↓

| CA finds user's RSA public key by the pseudonym certificate | <u>162</u> |

Fig. 16

| Root Poof Unit 171 | Pseudonym Certificate Generating Unit 172 | Transmission Unit 173 | Storage Unit 177 |
|---|---|---|---|

Data Bus

| Root Proof Requesting Unit 174 | Anonymous Public Key Generating Unit 175 | Proving Unit 176 | Verifying Unit 178 |
|---|---|---|---|

170

Fig. 17

| System Parameter Computing Unit 181 | Parameter Publishing Unit 182 | Root Proof Request Receiving Unit 183 | Root Proof Generating Unit 184 |
|---|---|---|---|

Data Bus

| Examining Unit 185 | Storage Unit 187 | Tracing Unit 186 |
|---|---|---|

180

Fig. 18

Pseudonym Certificate

U

V

M

190

Tracing

Fig. 19

| The group manager sets up a group, publishes group public key, and stores private key       201 |
| --- |

| The user gets a group private key       202 |
| --- |

| The user computes anonymous public keys       203 |
| --- |

| The user signs the anonymous public key       204 |
| --- |

| The user submits the anonymous public key and the group signature to a verifier       205 |
| --- |

| The verifier verifies user's anonymous public key by a group signature verification algorithm       206 |
| --- |

Fig. 20

Challenge Message

Generate a challenge
message     211

Sign the challenge
message     212

Group Signature

Perform group signature
verification     213

Prover

Verifier

Fig. 21

Pre-compute a group
signature of a public
key     221

Public Key And
Pseudonym Certificate

Perform group signature
verification     222

Perform knowledge
proof     224

Knowledge Regarding
the Public Key

Perform knowledge
proof     223

Prover

Verifier

Fig. 22

Receive the public key and the pseudonym certificate from the prover 231

Compare the received public key with public keys that have been verified correctly and stored 232

Match one of the stored public keys?

Yes

No

Perform group signature verification 233

No

Correct?

Yes

End

Store the received public key 234

Perform knowledge proof concerning the public key 235

Fig. 23

Group Signature Verification Part 241

Public Key Knowledge Verification Part 242

Verification Module 245

Memory 243

Comparison Module 244

240

Fig. 24

CA Certified
Public-key

Bob

Private-key of
Alice

CA

CA Certified
Public-key

Cindy

CA Certified
Public-keys

Danny

Fig. 25

Bob Certified
Public-key of Alice

Bob

Private-key of
Alice

Bob Certified
Public-key

Cindy

Alice

Fig. 26

**European Patent Office**

**EUROPEAN SEARCH REPORT**

Application Number

EP 06 01 9549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/236942 A1 (KIM MYUNG-SUN [KR] ET AL) 25 November 2004 (2004-11-25) <br> * paragraph [0003] * <br> * paragraph [0009] - paragraph [0010] * <br> * paragraph [0025] - paragraph [0028] * <br> * paragraph [0033] - paragraph [0041] * <br> ----- | 1-58 | INV. <br> H04L9/32 <br><br> ADD. <br> H04L29/06 |
| A | US 2001/011351 A1 (SAKO KAZUE [JP]) 2 August 2001 (2001-08-02) <br> * paragraph [0019] - paragraph [0052] * <br> * paragraph [0063] - paragraph [0097] * <br> ----- | 1-58 | |
| A | US 2002/004900 A1 (PATEL BAIJU V [US]) 10 January 2002 (2002-01-10) <br> * paragraph [0020] - paragraph [0043] * <br> ----- | 1-58 | |
| A | WO 00/01108 A (PRIVADA INC [US]) 6 January 2000 (2000-01-06) <br> * page 5, line 23 - page 32, line 14 * <br> ----- | 1-58 | |
| A | WATERS B R ET AL ASSOCIATION FOR COMPUTING MACHINERY: "Receiver anonymity via incomparable public keys" 27 October 2003 (2003-10-27), PROCEEDINGS OF THE 10TH. ACM CONFERENCE ON COMPUTER AND COMMUNICATIONSSECURITY. (CCS'03). WASHINGTON, DC, OCT. 27 - 31, 2003, ACM CONFERENCE ON COMPUTER AND COMMUNICATIONS SECURITY, NEW YORK, NY : ACM, US , XP002361168 ISBN: 1-58113-738-9 <br> * page 115 - page 117 * <br> ----- | 1-58 | TECHNICAL FIELDS SEARCHED (IPC) <br><br> H04L |
| A | AU 2004 201 058 B1 (LOCKSTEP CONSULTING) 9 September 2004 (2004-09-09) <br> * page 10 - page 17 * <br> ----- | 1-58 | |

The present search report has been drawn up for all claims

| Place of search | Date of completion of the search | Examiner |
|---|---|---|
| Munich | 12 January 2007 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 01 9549

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2007

| Patent document cited in search report | | Publication date | Patent family member(s) | | Publication date |
|---|---|---|---|---|---|
| US 2004236942 | A1 | 25-11-2004 | CN | 1574756 A | 02-02-2005 |
| | | | EP | 1480373 A1 | 24-11-2004 |
| | | | JP | 2004348709 A | 09-12-2004 |
| | | | KR | 20040099943 A | 02-12-2004 |
| US 2001011351 | A1 | 02-08-2001 | AU | 780858 B2 | 21-04-2005 |
| | | | AU | 1639001 A | 26-07-2001 |
| | | | CA | 2331991 A1 | 21-07-2001 |
| | | | EP | 1136927 A2 | 26-09-2001 |
| | | | JP | 2001202013 A | 27-07-2001 |
| | | | SG | 108237 A1 | 28-01-2005 |
| US 2002004900 | A1 | 10-01-2002 | NONE | | |
| WO 0001108 | A | 06-01-2000 | CA | 2335968 A1 | 06-01-2000 |
| | | | EP | 1145479 A2 | 17-10-2001 |
| AU 2004201058 | B1 | 09-09-2004 | WO | 2005088899 A1 | 22-09-2005 |
| | | | EP | 1730880 A1 | 13-12-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4405829 A, Rivest

- CN 200410090903X

### Non-patent literature cited in the description

- **TAHIR ELGAMAL.** A public-key cryptosystem and a signature scheme based on discrete logarithms. *Advances in Cryptology Proceedings; CRYPTO 84,* 1985, 10-18
- **B. R. WATERS ; E. W. FELTEN ; A. SAHAI.** *Receiver Anonymity via Incomparable Public keys, CCS'03,* 112-121
- **N. BARIC ; B. PFITZMANN.** Collision-free Accumulators and Fail-stop Signature Schemes without Trees. *Advances in Cryptology-EUROCRYPT'97,* 1997, 480-494
- **R. CRAMER ; V. SHOUP.** Signature Schemes Based on The Strong RSA Assumption. *ACM Transactions on Information and System Security,* 2000, vol. 3 (3), 161-185
- **S. GOLDWASSER ; S. MICALI ; C. RACKOFF.** The Knowledge Complexity of Interactive Proof Systems. *17th ACM Symposium on Theory of Computation,* 1985, 291-304
- **A. FIAT ; A. SHAMIR.** How To Prove Yourself- Practical Solutions to Identification and Signature Problems. *Advances in Cryptology - CRYPTO'86,* 1986, 186-194
- **D. CHAUM.** Demonstrating Possession of a Discrete Logarithm without Revealing It. *Advances in Cryptology - CRYPTO'86,* 1987, 200-212
- **D. CHAUM ; J. H. EVERTSE ; J. VAN DE GRAAF.** An Improved Protocol for Demonstrating Possession of Discrete Logarithms and Some Generalizations. *Advances in Cryptology - EUROCRYPTO'87,* 1987, 127-141

- **D. CHAUM ; T. P. PEDERSEN.** Wallet Databases with Observers. *Advances in Cryptology - CRYPTO'92,* 1993, 89-105
- **K. SAKO ; J. KILIAN.** Receipt-Free Mix-Type Voting Scheme-A Practical Solution to the Implementation of a Voting Booth. *Advances in Cryptology - CRYPTO'98,* 1998, 393-403
- **T. OKAMOTO.** An Efficient Divisible Electronic Cash Scheme. *Advances in Cryptology - CRYPTO'95,* 1995, 438-451
- **A. CHAN ; Y. FRANKEL ; Y. TSIOUNIS.** Easy Come - Easy Go Divisible Cash. *Advances in Cryptology - EUROCRYPT'98,* 1998, 561-575
- **B. R. WATERS ; E. W. FELTEN ; A. SAHAI.** Receiver Anonymity via Incomparable Public Keys. *CCS'03,* 2003, 112-121
- **D. CHAUM ; E. VAN HEYST.** Group Signatures. *Advances in Cryptology - EUROCRYPTO'91,* 1991, 257-265
- **J. CAMENISCH ; M. MICHELS.** A Group Signature Scheme Based on an RSA-Variant. *Advances in Cryptology - ASIACRYPT'98,* 1998, 160-174
- **G. ATENIESE ; J. CAMENISCH ; M. JOYE ; G. TSUDIK.** A Practical and Provably Secure Coalition-Resistant Group Signature Scheme. *Advances in Cryptology - CRYPTO'2000,* 2000, 255-270